# EUROPEAN PATENT SPECIFICATION

(11) **EP 3 312 242 B1**
(45) Date of publication and mention of the grant of the patent: **26.06.2019**
(21) Application number: 16195267.6
(22) Date of filing: 24.10.2016
(51) Int. Cl.: C09D 1/00, C09C 3/00, C09C 3/10, C09C 3/12, C09D 5/16, C09C 1/30

(54) **PROTECTIVE COATING COMPOSITION WITH MIXED FUNCTIONALITIES**
SCHUTZBESCHICHTUNGSZUSAMMENSETZUNG MIT GEMISCHTEN FUNKTIONALITÄTEN
COMPOSITION DE REVÊTEMENT PROTECTEUR À FONCTIONNALITÉS MIXTES

(43) Date of publication of application: 25.04.2018
(73) Proprietor: 3M Innovative Properties Company, Saint Paul, MN 55133-3427 (US)
(72) Inventor: Schuell, Christoph, 41453 Neuss (DE); Strerath, Christiane, 41453 Neuss (DE); Goeb, Siegfried, 41453 Neuss (DE); Jing, Naiyong, Sint Paul, MN Minnesota 55144-1000 (US)
(74) Representative: Gabriel, Kiroubagaranne

(56) References cited:
- WO-A1-2012/051341
- WO-A1-2015/164468
- WO-A1-2016/090368
- WO-A2-2011/084661
- WO-A2-2012/167017
- US-A1- 2014 034 651
- MING PAN ET AL: "Fluorinated Pickering Emulsions with Nonadsorbing Interfaces for Droplet-based Enzymatic Assays", ANALYTICAL CHEMISTRY, vol. 87, no. 15, 4 August 2015 (2015-08-04), pages 7938-7943, XP055275180, US ISSN: 0003-2700, DOI: 10.1021/acs.analchem.5b01753
- DATABASE WPI Week 201561 Thomson Scientific, London, GB; AN 2015-44459J XP002768340, -& CN 104 629 616 A (FOSHAN GAOMING PRODUCTIVITY PROMOTION) 20 May 2015 (2015-05-20)

## Description

### Technical Field

The present disclosure relates to functional coating compositions which are useful for protecting surfaces, in particular hard surfaces. The present disclosure also relates to a method of treating a hard surface.

### Background

Surfaces provided with oleophobic and hydrophilic properties may find various applications such as oil-water separation, filtration or dirt repellency.

Various coating formulations, in particular fluorinated compositions, have been described in the art for treating substrates and surfaces to render them either oleophobic (i.e. oil repellent) or hydrophilic (i.e. having high affinity for water). Rare coating compositions or materials imparting both oleophobic and hydrophilic are described e.g. in US-A1-2008/0319153 (Clark et al.), in US-A1-2009/0317621, in US-A1-2014/0048478 (Bal et al.) or in US 5,385,175 (Rivero et al.). These coating compositions, in particular aqueous coating compositions based on functional polymers, generally suffer from a number of drawbacks including manufacturing complexity and handling, which detrimentally affects practicality and production costs. The introduction of mixed functionalities providing hydrophilic and oleophobic properties may indeed be associated with undesired side reactions such as e.g. condensation reaction, random polymerization or copolymerization of the starting functionality-imparting moieties. These unwanted side reactions, which are mainly due to incompatibilities between the typically antagonist functionality-imparting moieties, may not only compromise the desired functionalization of the coating composition but may also affect the secondary properties of the resulting coating composition such as e.g. optical properties (in particular transparency), coatability, or abrasion resistance.

Without contesting the technical advantages associated with the protective coating compositions known in the art, there is still a need for protective coating compositions providing excellent oleophobic and hydrophilic properties and useful to impart durable easy-to-clean properties to the treated surfaces.

Other advantages of the coating compositions and methods of the disclosure will be apparent from the following description.

### Summary

According to one aspect, the present disclosure relates to a protective coating composition comprising:
a) an aqueous continuous liquid phase; and
b) acidified silica nanoparticles dispersed in the aqueous continuous liquid phase, wherein the acidified silica nanoparticles comprise mixed hydrophilic and oleophobic surface functionalization, wherein the hydrophilic surface functionalization is obtained by covalently linking the silica nanoparticle to an organofunctional moiety comprising a functional group selected from the group consisting of polyalkyleneoxy-containing moieties and zwitterionic moieties, and wherein the oleophobic surface functionalization is obtained by covalently linking the silica nanoparticle to an organofunctional moiety comprising a functional group selected from fluorine-containing moieties, and wherein the mixed hydrophilic and oleophobic surface functionalization is obtained by providing acidified silica nanoparticles having exclusively hydrophilic surface functionalization in combination with acidified silica nanoparticles having exclusively oleophobic surface functionalization.

In another aspect, the present disclosure is directed to a silica nanoparticle as described above, which comprise both hydrophilic and oleophobic surface functionalization, wherein the hydrophilic surface functionalization is obtained by covalently linking the silica nanoparticle to an organofunctional moiety comprising a functional group selected from the group consisting of polyalkyleneoxy-containing moieties and zwitterionic moieties, and wherein the oleophobic surface functionalization is obtained by covalently linking the silica nanoparticle to an organofunctional moiety comprising a functional group selected from fluorine-containing moieties.

In still another aspect, the present disclosure is directed to a method of treating a hard surface comprising the steps of:
a) providing a protective coating composition as described above;
b) applying the protective coating composition to the hard surface thereby forming a layer of the coating composition adjacent to the hard surface; and
c) optionally, drying and/or curing the layer of the coating composition thereby forming a protective coating layer adjacent to the hard surface.

According to yet another aspect, the present disclosure relates to the use of a protective coating composition or a silica nanoparticle as described above for protecting a hard surface, in particular for imparting easy-to-clean properties to the hard surface.

### Detailed description

The subject matter of the present invention is defined in claims 1-13 as attached. Embodiments described herein which are not covered by the claims merely serve to illustrate the technical context of the present invention.

According to a first aspect, the present disclosure relates to a protective coating composition comprising:
a) an aqueous continuous liquid phase; and
b) acidified silica nanoparticles dispersed in the aqueous continuous liquid phase, wherein the acidified silica nanoparticles comprise mixed hydrophilic and oleophobic surface functionalization, wherein the hydrophilic surface functionalization is obtained by covalently linking the silica nanoparticle to an organofunctional moiety comprising a functional group selected from the group consisting of polyalkyleneoxy-containing moieties and zwitterionic moieties, and wherein the oleophobic surface functionalization is obtained by covalently linking the silica nanoparticle to an organofunctional moiety comprising a functional group selected from fluorine-containing moieties, and wherein the mixed hydrophilic and oleophobic surface functionalization is obtained by providing acidified silica nanoparticles having exclusively hydrophilic surface functionalization in combination with acidified silica nanoparticles having exclusively oleophobic surface functionalization.

In the context of the present disclosure, it has been surprisingly found that a protective coating composition as described above provides excellent easy-to-clean properties when used to treat a surface, in particular easy-to-clean properties towards oily contamination.

Without wishing to be bound by theory, it is believed that these excellent easy-to-clean properties are due to the specific combination of excellent oleophobic and hydrophilic properties provided respectively by: the acidified silica nanoparticles comprising a hydrophilic surface functionalization obtained by covalently linking the silica nanoparticle to an organofunctional moiety comprising a functional group selected from the group consisting of polyalkyleneoxy-containing moieties and zwitterionic moieties, and the acidified silica nanoparticles comprising an oleophobic surface functionalization obtained by covalently linking the silica nanoparticle to an organofunctional moiety comprising a functional group selected from fluorine-containing moieties. Still without being bound by theory, it is believed that due to the dual oleophobic and hydrophilic properties provided to the treated surface, oily contaminants which may contain polar and non-polar moieties, are repelled from the treated surface although being still attracted by the hydrophilic nature of the very same treated surface. This is a very surprising result as hydrophilic coatings are generally known to be at the same time oleophilic, while oleophobic coatings are generally known to impart hydrophobicity to the treated surface.

The protective coating compositions according to the present disclosure provide the treated surface with an excellent balance of both high oleophobicity and high hydrophilicity, without suffering from the disadvantages known to be associated with the protective coating compositions known in the art. In the context of the present disclosure, it has been found that the use of acidified silica nanoparticles as carrier means to support the antagonist hydrophilic and oleophobic functionality-imparting moieties provide an outstanding and improved alternative to the known functional polymers-based coating compositions, by strongly reducing (if not eliminating) the unwanted side reactions mainly due to the incompatibilities between the free antagonist functionality-imparting moieties, and by providing improved durability and abrasion resistance to the resulting protective coating.

The protective coating compositions as described herein are outstandingly suitable for reducing oily and soil contamination from the treated surface. As such, the protective coating compositions of the present disclosure are particularly suited for imparting "easy-to-clean" or "easy soil removal" properties to a surface, in particular cleaning or removal with water or aqueous cleaning compositions. Due to the particular combination of hydrophilic and oleophobic surface properties, the protective coating compositions of the present disclosure are suitable for various other applications such as anti-fog, water-oil separation, oil transportation, purification, filtration, just to name a few. While non-polar substances are repelled form the surface by the oleophobicity, polar substances such as water can spread on the surface and underneath the non-polar contaminants. Thereby, the substances with different polarity may be separated or non-polar components may be removed easily by rinsing with water.

The protective coating compositions of the present disclosure may find utility as protective coating for various metallic and non-metallic surfaces (in particular glass substrates) encountered in a large variety of articles including those present in home or commercial kitchens, in decorative household appliances and lighting, glassware, buildings, in bathrooms, or in automotive vehicles.

The protective coating compositions as described herein are also characterized by the following advantageous properties, including: environmental friendliness of the materials used, excellent stability of the dispersion, excellent shelf-life, easy manufacturing and handling, ease of use by a relatively unskilled user, excellent coatability, outstanding optical properties (in particular transparency, homogeneity, streak-free appearance), and excellent durability, in particular wet mechanical abrasion resistance.

In the context of the present disclosure, the expression "aqueous continuous liquid phase" is meant to designate a solvent phase comprising water or a mixture of water and at least one organic solvent.

In the context of the present disclosure, the expression "zwitterionic moiety" is meant to designate a moiety comprising both cationic and anionic groups, or corresponding simultaneously ionizable groups.

Unless otherwise stated, the following terms used in the specification and claims have the meanings given below:
The term "alkyl" means a linear or branched, cyclic or acylic, saturated monovalent hydrocarbon. The term "alkylene" means a linear saturated divalent hydrocarbon or a branched saturated divalent hydrocarbon. The term "alkoxy" means an alkyl having a terminal oxygen atom. The term "oxyalkoxy" has essentially the meaning given above for alkoxy except that one or more oxygen atoms may be present in the alkyl chain. The term "oxyalkyl" has essentially the meaning given above for alkyl except that one or more oxygen heteroatoms may be present in the alkyl chain, these heteroatoms being separated from each other by at least one carbon. The term "oxyalkylene" has essentially the meaning given above for alkylene except that one or more oxygen heteroatoms may be present in the alkylene chain, these heteroatoms being separated from each other by at least one carbon. The term "polyalkyleneoxy-containing moiety" refers to any chemical moiety comprising alkyleneoxy units, in particular ethyleneoxy or propylenoxy units. The term "perfluoroalkyl" has essentially the meaning given above for "alkyl" except that all or essentially all of the hydrogen atoms of the alkyl are replaced by fluorine atoms. The term "perfluoroalkylene" has essentially the meaning given above for "alkylene" except that all or essentially all of the hydrogen atoms of the alkylene are replaced by fluorine atoms. The term "perfluorooxyalkyl" has essentially the meaning given above for "oxyalkyl" except that all or essentially all of the hydrogen atoms of the oxyalkyl are replaced by fluorine atoms. The term "perfluorooxyalkylene" has essentially the meaning given above for "oxyalkylene" except that all or essentially all of the hydrogen atoms of the oxyalkylene are replaced by fluorine atoms. The expression "perfluorinated group" means an organic group wherein all or essentially all of the carbon bonded hydrogen atoms are replaced with fluorine atoms.

In the context of the present disclosure, the term "oleophobic" is meant to designate the ability to repel or to not combine with oil or grease. The term "hydrophilic" is meant to designate the ability to have high affinity with water (e.g. the tendency to bind or attract water.

In the context of the present invention, the acidified silica nanoparticles comprise a surface functionalization. This is meant to designate that the surface of the silica nanoparticles is provided with organic functional groups through covalent bonds between the organic functional groups and the surface of the silica nanoparticles.

The protective coating composition of the present disclosure comprises acidified silica nanoparticles dispersed in the aqueous continuous liquid phase.

Suitable silica nanoparticles, dispersions, and methods of manufacturing thereof, are fully described in WO 2009/140482 (Jing et al.), in WO 2010/017069 (Jing et al.) and in WO 2011/002838 A1.

Any (acidified) silica nanoparticles aqueous dispersions commonly known in the art, may be used in the context of the present disclosure. Silica nanoparticles for use in the present disclosure preferably comprise nanometer-sized particles. The term "nanometer-sized" refers to particles that are characterized by an average particle size (i.e., the average of the largest dimension of the particles, or the average particle diameter for spherical particles) in the nanometer range.

The non-surface functionalized silica nanoparticles for use herein typically have an average particle diameter comprised between 1 and 150 nanometers, between 2 and 100 nanometers, or even between 3 and 80 nanometers (prior to surface modification functionalization).

In one aspect of the present disclosure, the average particle size is no greater than 45 nm, no greater than 20 nm, even more preferably no greater than 10 nm (prior to surface modification). The average particle size of the silica nanoparticles is typically at least 1 nm, at least 2 nm, or even at least 3 nm.

In one particular aspect, the average particle of the non-surface functionalized silica nanoparticles for use herein have an average particle diameter comprised between 1 and 20 nanometers, between 2 and 15 nanometers, between 3 and 10 nanometers, or even between 4 and 8 nanometers.

In another aspect, the average particle of the non-surface functionalized silica nanoparticles for use herein have an average particle diameter comprised between 10 and 150 nanometers, between 20 and 120 nanometers, between 30 and 100 nanometers, or even between 50 and 90 nanometers.

Average particle size of the silica nanoparticles can be measured using transmission electron microscopy. In the context of the present disclosure, the average particle diameter of the silica nanoparticles for use herein refers to the number average particle size and is determined using Field Emission Scanning Electron Microscopy (FE-SEM) techniques, well known to those skilled in the art.

It is also preferable that the silica nanoparticles be relatively uniform in size. Uniformly sized silica nanoparticles generally provide more reproducible results. Preferably, variability in the size of the nanoparticles is less than 25% of the mean particle size. Alternatively, the silica nanoparticles may have any particle size distribution consistent with the above described average particle size. For example, the particle size distribution may be monomodal, bimodal or polymodal.

Silica nanoparticles for use herein (prior to functionalization) are preferably water-dispersible to reduce, and preferably prevent, excessive agglomeration and precipitation of the particles in an aqueous environment. The silica nanoparticles for use are preferably referred to herein as colloidal nanoparticles since they can be individual particles or small agglomerates thereof. The silica nanoparticles for use herein are dispersions of submicron size silica nanoparticles in an aqueous or in a water/organic solvent mixture.

The nanoparticles for use herein generally have a specific surface area greater than about 50 m²/gram, preferably greater than 200 m²/gram, and more preferably greater than 400 m²/gram. The particles preferably have narrow particle size distributions, that is, a polydispersity of 2.0 or less, preferably 1.5 or less. If desired, larger silica particles may be added, in amounts that do not deleteriously decrease the coatability of the composition on a selected substrate, and do not reduce the transmissivity and/or the hydrophilicity. Silica nanoparticles for use in the present disclosure may be porous or nonporous.

Suitable inorganic silica sols of porous and nonporous spherical particles in aqueous media are well known in the art and available commercially. Silica sols in water or water-alcohol solutions are available commercially under such trade names as LUDOX (manufactured by E.I. du Pont de Nemours and Co., Inc., Wilmington, Del., USA), NYACOL (available from Nyacol Co., Ashland, MA) or NALCO (manufactured by Ondea Nalco Chemical Co., Oak Brook, Ill. USA). One useful silica sol is NALCO 2326 available as a silica sol with mean particle size of 5 nanometers, pH 10.5, and solid content 15% by weight. Other commercially available silica nanoparticles for use herein include NALCO 1050, NALCO 1115, NALCO 1130, NALCO 2329, NALCO 8699 and NALCO TX11561, commercially available from NALCO Chemical Co.; REMASOL SP30, commercially available from Remet Corp. of Utica, NY; LUDOX SM, commercially available from E. I. du Pont de Nemours Co., Inc.; LI-518 and SI-5540, commercially available from Silco company. Other commercially available silica sols in water dispersion are available commercially under such trade names as Levasil or Bindzil (manufactured by Akzo Nobel). Some useful silica sols are Levasil 500/15, Levasil 50/50, Levasil 100/45, Levasil 200/30, Bindzil 15/500, Bindzil 15/750 and Bindzil 50/80. In one particular aspect, suitable silica nanoparticles for use of the present invention are preferably spherical particles.

Suitable silica nanoparticles for use in the present disclosure may be acicular. The term "acicular" refers to the general needle-like, elongated shape of the particles and may include other sting-like, rod-like, chain-like shapes, as well as filamentary shapes. Suitable acicular silica particles may be obtained as an aqueous suspension under the trade name SNOWTEX-UP or SNOWTEX-OUP by Nissan Chemical Industries (Tokyo, Japan). The SNOWTEX-UP mixture consists of 20-21 % (w/w) of acicular silica, less than 0.35% (w/w) of Na2O, and water. The particles are about 9 to 15 nanometers in diameter and have lengths of 40 to 300 nanometers. The suspension has a viscosity of <100 mPas at 25oC, a pH of about 9 to 10.5, and a specific gravity of about 1.13 at 20oC. As for the SNOWTEX-OUP mixture, it consists of a 15-16 % (w/w) of acicular silica, with a pH of about 2 to 4.

Low-or non-aqueous silica sols (also called silica organosols) may also be used and are silica sol dispersions wherein the liquid phase is an organic solvent, or an aqueous organic solvent. In the practice of this disclosure, the silica sol is chosen so that its liquid phase is compatible with the emulsion, and is typically aqueous or an aqueous organic solvent.

The coating compositions for use herein preferably comprise at least 50, 60, 70, 80, 90, or even at least 95wt% of water, based on the total weight of the overall coating composition. While the coating compositions is preferably essentially free of (i.e. that contains less than 0.1 percent by weight based on the total weight of the aqueous continuous liquid phase) organic solvents, especially volatile organic solvents, organic solvents may - in some aspects - optionally be included. If present, the organic solvents should advantageously be water-soluble, or at least water-miscible in the amounts in which they are used, although this is not a requirement.

Accordingly, in some particular aspects of the protective coating composition according to this disclosure, the aqueous continuous liquid phase further comprises an organic solvent, in particular a polar solvent. Examples of organic solvents for use herein include acetone and lower molecular weight ethers and/or alcohols such as methanol, ethanol, isopropanol, butanol, n-propanol, glycerin, ethylene glycol, triethylene glycol, propylene glycol, 2-butoxy ethanol, ethylene or propylene glycol monomethyl or monoethyl ether or n-butyl ether, diethylene or dipropylene glycol methyl or ethyl ether or n-butyl ether, ethylene or propylene glycol dimethyl ether, and triethylene glycol monomethyl or monoethyl ether.

In one exemplary aspect of the present disclosure, the organic solvent for use herein is selected from the group of alcohols, in particular from the group consisting of n-hexanol, 2-butoxyethanol, and any combinations thereof.

In the context of the present disclosure, it has been surprisingly discovered that the inclusion of an organic solvent in the aqueous continuous liquid phase of the coating composition may beneficially impact the preparation of the protective coating compositions, in particular the protective coating compositions wherein the mixed hydrophilic and oleophobic surface functionalization is obtained by providing acidified silica nanoparticles having both hydrophilic and oleophobic surface functionalization. More specifically, it has been found that the presence of an organic solvent in the aqueous continuous liquid phase allows reducing and even preventing unwanted phase separation during the surface functionalization of the silica nanoparticles. This advantageously results into protective coatings provided not only with improved optical properties (in particular transparency, homogeneity and streak-free appearance) and improved coatability, but also with improved hydrophilic and oleophobic functionalization.

According to another exemplary aspect according to which an organic solvent is present in the aqueous continuous liquid phase, the protective coating composition comprises an organic solvent in an amount greater than 1 wt%, greater than 2 wt%, greater than 5 wt%, greater than 8 wt%, or even greater than 10 wt%, based on the weight of the overall coating composition. Advantageously still, the protective coating composition comprises an organic solvent in an amount comprised between 2 and 20 wt%, between 3 and 15 wt%, between 5 and 12 wt%, or even between 6 and 10 wt%, based on the weight of the overall coating composition.

In a typical aspect of the present disclosure, the protective coating composition comprises:
a) an aqueous dispersion of silica nanoparticles having mixed hydrophilic and oleophobic surface functionalization into an aqueous continuous liquid phase; and
b) an acid having a pKa of less than 5, less than 3, less than 2, or even less than 0.

The protective coating compositions for use herein may preferably be acidified to the desired pH level with an acid having preferably a pKa (H₂O) of less than 5, less than 4, less than 3.5, less than 3, less than 2.5, less than 2, less than 1.5, less than 1, or even less than 0. Useful acids for use herein include both organic and inorganic acids and may be exemplified by oxalic acid, citric acid, H₂SO₃, H₃PO₄, CF₃CO₂H, HCl, HBr, HI, HBrO₃, HNO₃, HClO₄, H₂SO₄, CF₃SO₃H, CF₃CO₂H, and CH₃SO₂OH. Preferred acids include HCl, HNO₃, H₂SO₄, and H₃PO₄. In some aspects, it might desirable to provide a mixture of an organic and inorganic acid. In some other aspects, it might be beneficial to use a mixture of acids comprising those having a pKa of 3.5 or less (preferably less than 2.5, most preferably less than 1) and minor amounts of other acids having pKa's of more than 0.

The protective coating compositions for use herein preferably contain sufficient acid to provide a pH of less than 5, less than 4, less than 3, or even less than 2. To facilitate handling, the coating compositions preferably have a pH of at least 1, more preferably at least 2.

According to another exemplary aspect of the present disclosure, the protective coating composition of the present disclosure, the weight concentration of the surface functionalized silica nanoparticles is comprised between 0.1 and 15 wt%, between 0.2 and 10 wt%, between 0.3 and 8 wt%, between 0.5 and 5 wt%, between 0.5 and 3 wt%, based on the weight of the overall coating composition.

According to particular aspect of the protective coating composition of the present disclosure, the mixed hydrophilic and oleophobic surface functionalization is obtained by providing either:
a) acidified silica nanoparticles having exclusively hydrophilic surface functionalization in combination with acidified silica nanoparticles having exclusively oleophobic surface functionalization; or
b) acidified silica nanoparticles having both hydrophilic and oleophobic surface functionalization.

According to one advantageous aspect of the protective coating composition of the present disclosure, the mixed hydrophilic and oleophobic surface functionalization is obtained by providing acidified silica nanoparticles having exclusively hydrophilic surface functionalization in combination with acidified silica nanoparticles having exclusively oleophobic surface functionalization.

According to another advantageous aspect of the protective coating composition of the present disclosure, the mixed hydrophilic and oleophobic surface functionalization is obtained by providing acidified silica nanoparticles having both hydrophilic and oleophobic surface functionalization.

According to one preferred aspect of the protective coating composition of the present disclosure, the hydrophilic surface functionalization is obtained by covalently linking the silica nanoparticle to an organofunctional moiety comprising a functional group selected from the group of polyalkyleneoxy-containing moieties.

Polyalkyleneoxy-containing moieties for use herein are not particularly limited. Any polyalkyleneoxy-containing moieties known in the art may be used in the context of the present disclosure. Suitable polyalkyleneoxy-containing moieties for use herein will be easily identified by those skilled in the art, in the light of the present description. Polyalkyleneoxy-containing moieties for use herein may typically include ethyleneoxy and/or propyleneoxy units.

In a typical aspect of the protective coating composition of the present disclosure, the polyalkyleneoxy-containing moieties comprise at least 3 alkyleneoxy units, at least 5 alkyleneoxy units, at least 7 alkyleneoxy units, or even at least 10 alkyleneoxy units. Advantageously, the polyalkyleneoxy-containing moieties for use herein comprise from 3 to 30, from 3 to 20 or even from 3 to 10 alkyleneoxy units.

In a particular aspect of the present disclosure, the polyalkyleneoxy-containing moieties for use herein have the general formula (I):

-(-O-CH(R¹)-CH₂-)ₙ-O-R² (I)

wherein:
n is an integer of at least 3, at least 5, at least 10, or even comprised between 3 and 30 ;
R¹ is H or CH₃; and
R² is H or an alkyl group having from 1 to 20 carbon atoms, from 1 to 10 carbon atoms, from 1 to 5 carbon atoms, or even from 2 to 3 carbon atoms.

According to an advantageous aspect of the protective coating composition of the present disclosure, the organofunctional moiety comprising a functional group selected from the group consisting of polyalkyleneoxy-containing moieties has the following general formula (II):

(R⁴)₃₋ₘ(R³O)ₘ-Si-X-(-O-CH(R¹)-CH₂-)ₙ-O-R² (II)

wherein:
n is an integer of at least 3, at least 5, at least 10, or even comprised between 3 and 30 ;
R¹ is H or CH₃;
m is an integer from 0 to 3;
R² is H or an alkyl group having from 1 to 20 carbon atoms, from 1 to 10 carbon atoms, from 1 to 5 carbon atoms, or even from 2 to 3 carbon atoms;
R³ and R⁴ are independently an alkyl group having from 1 to 8 carbon atoms, from 1 to 6 carbon atoms, or even from 1 to 4 carbon atoms; and
X is a divalent linking group, preferably independently selected from the group consisting of alkyl, alkoxy, acyloxy, or carbamoyl.

According to a preferred aspect of the protective coating composition of the present disclosure, the organofunctional silane comprising a functional group selected from the group consisting of polyalkyleneoxy-containing moieties has one of the following formula: 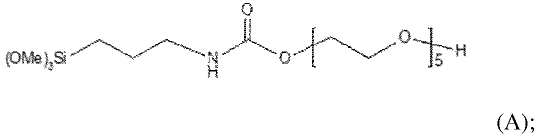 or

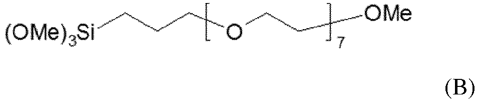

According to a very preferred aspect of the protective coating composition of the present disclosure, the organofunctional silane comprising a functional group selected from the group consisting of polyalkyleneoxy-containing moieties is compound (B).

According to another preferred aspect of the protective coating composition of the present disclosure, the hydrophilic surface functionalization is obtained by covalently linking the silica nanoparticle to an organofunctional moiety comprising a functional group selected from the group of zwitterionic moieties.

Zwitterionic moieties for use herein are not particularly limited. Any zwitterionic moiety known in the art may be used in the context of the present disclosure. Suitable zwitterionic moieties for use herein will be easily identified by those skilled in the art, in the light of the present description.

In a particular aspect of the present disclosure, the zwitterionic moiety for use herein comprises functional groups selected from the group consisting of sulfonate groups, sulfate groups, phosphonate groups, phosphate groups, carboxylate groups, quaternary ammonium groups, sulfonium groups, phosphonium groups, and any combinations thereof.

In another particular aspect, the zwitterionic moiety for use herein comprises a positively charged group selected from quaternary ammonium groups, sulfonium groups, phosphonium groups; and a negatively charged group selected from sulfonate groups, sulfate groups, phosphonate groups, phosphate groups, carboxylate groups.

According to a preferred aspect of the amphiphilic copolymer of the present disclosure, the zwitterionic moiety comprises a positively charged group selected from quaternary ammonium groups, and a negatively charged group selected from sulfonate groups and phosphate groups.

According to a more preferred aspect, the zwitterionic moiety for use herein comprises a positively charged group selected from quaternary ammonium groups, and a negatively charged group selected from sulfonate groups.

According to another advantageous aspect, the zwitterionic moiety for use herein comprises a positively charged group selected from quaternary ammonium groups, and a negatively charged group selected from phosphate groups.

In still another advantageous aspect of the protective coating composition of the present disclosure, the organofunctional silane comprising a functional group selected from the group consisting of zwitterionic moieties has the following general formula (III):

-A-Y-B-Z (III)

wherein:
A and B are linking groups, which are the same or different moieties, and which are independently selected from the group of alkylene or oxyalkylene groups;
Y and Z are interchangeably the positively charged group or the negatively charged group of the zwitterionic moieties.

Advantageously, linking groups A and B are independently selected from the group of alkylene groups, in particular alkylene groups comprising from 1 to 8 carbon atoms, from 1 to 6 carbon atoms, or even from 1 to 4 carbon atoms; and Y and Z are interchangeably selected from the group consisting of sulfonate groups, sulfate groups, phosphonate groups, phosphate groups, carboxylate groups, quaternary ammonium groups, sulfonium groups, phosphonium groups, and any combinations thereof.

Advantageously still, linking groups A and B are independently selected from the group of alkylene groups comprising from 1 to 6 carbon atoms, or even from 1 to 4 carbon atoms; and Y and Z are interchangeably selected from the group consisting of sulfonate groups, phosphonate groups, and quaternary ammonium groups.

In a preferred aspect of the protective coating composition of the present disclosure, linking groups A and B are independently selected from the group of alkylene groups comprising from 1 to 4 carbon atoms, in particular propyl and butyl; and Y is selected from the group consisting of ammonium groups; and Z is selected from the group consisting of sulfonate groups.

In another preferred aspect of the protective coating composition of the present disclosure, the organofunctional moiety comprising a functional group selected from the group consisting of zwitterionic moieties has the following general formula (IV):

(R⁶)₃₋ₚ(R⁵O)ₚ-Si-A-Y-B-Z (IV)

wherein:
R⁵ and R⁶ are independently an alkyl group having from 1 to 8 carbon atoms, from 1 to 6 carbon atoms, or even from 1 to 4 carbon atoms;
p is an integer from 0 to 3;
A and B are linking groups, which are the same or different moieties, and which are independently selected from the group of alkylene or oxyalkylene groups; and
Y and Z are interchangeably the positively charged group or the negatively charged group of the zwitterionic moieties.

In still another preferred aspect of the protective coating composition of the present disclosure, the organofunctional silane comprising a functional group selected from the group consisting of zwitterionic moieties has the following formula: 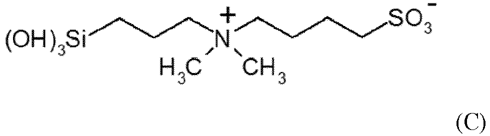 wherein compound (C) is also referred to as 3-(N-3-sulfobutyl-N,N-diethylammonium)trihydroxysilane.

According to the present disclosure, the oleophobic surface functionalization is obtained by covalently linking the silica nanoparticle to an organofunctional moiety comprising a functional group selected from fluorine-containing moieties.

Fluorine-containing moieties for use herein are not particularly limited. Any fluorine-containing moiety known in the art may be used in the context of the present disclosure. Suitable fluorine-containing moieties for use herein will be easily identified by those skilled in the art, in the light of the present description.

In a particular aspect of the present disclosure, the fluorine-containing moieties for use herein are selected from the group consisting of fluoroalkyl groups, perfluoroalkyl groups, fluorooxyalkyl groups, perfluorooxyalkyl groups, fluoroalkylene groups, perfluoroalkylene groups, fluorooxyalkylene groups, perfluorooxyalkylene groups, perfluoropolyether groups, and any combinations thereof.

In an exemplary aspect, the fluorine-containing moieties for use herein are selected from the group consisting of fluoroalkyl groups, perfluoroalkyl groups, fluorooxyalkyl groups, perfluorooxyalkyl groups, perfluorooxyalkylene groups, perfluoropolyether groups, and any combinations thereof.

In another exemplary aspect, the fluorine-containing moieties for use herein are selected from the group consisting of perfluoroalkyl groups, perfluorooxyalkyl groups, perfluoropolyether groups, perfluorooxyalkylene groups, in particular perfluorooxyalkylene oligomeric groups, and any combinations thereof.

In a particular aspect of the protective coating composition according to the disclosure, the fluorine-containing moieties of the organofunctional moiety comprising a functional group selected from fluorine-containing moieties have the general formula (V):

- C - V - Rf (V)

wherein:
C is a linking group selected from the group of alkylene groups, oxyalkylene groups;
V is selected from -C(O)NH- or -CH₂- ; and
Rf is the fluorine-containing moiety.

According to an advantageous aspect, C is selected from the group of alkylene groups comprising from 1 to 8 carbon atoms, from 1 to 6 carbon atoms, or even from 1 to 4 carbon atoms; V is selected to be -CH₂-; and Rf is selected from the group of perfluoroalkyl groups or perfluorooxyalkyl groups, preferably comprising a linear or branched alkyl group comprising from 1 to 8 carbon atoms, from 2 to 8 carbon atoms, from 2 to 6 carbon atoms, or even from 2 to 4 carbon atoms.

According to another advantageous aspect, C is selected from the group of alkylene groups comprising from 1 to 8 carbon atoms, from 1 to 6 carbon atoms, or even from 1 to 4 carbon atoms; V is selected to be -C(O)NH-; and Rf is selected from the group of perfluoropolyether groups and perfluorooxyalkylene oligomeric moieties.

According to an advantageous aspect of the protective coating composition of the present disclosure, the organofunctional moiety comprising a functional group selected from fluorine-containing moieties has the following general formula (VI):

(R⁸)_{3-q}(R⁷O)_{q}-Si-C-V-Rf (VI)

wherein:
R⁷ and R⁸ are independently an alkyl group having from 1 to 8 carbon atoms, from 1 to 6 carbon atoms, or even from 1 to 4 carbon atoms;
q is an integer from 0 to 3;
C is a linking group selected from the group of alkylene groups, oxyalkylene groups;
V is selected from -C(O)NH- or -CH₂- ; and
Rf is the fluorine-containing moiety.

According to a preferred aspect of the protective coating composition of the present disclosure, the organofunctional silane comprising a functional group selected from fluorine-containing moieties has one of the following formula: 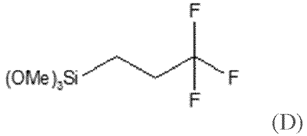 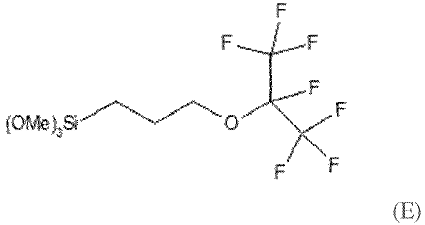 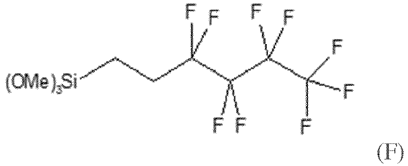 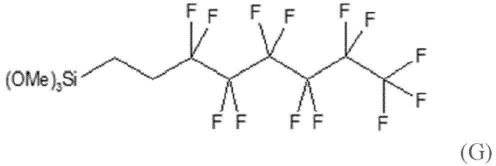 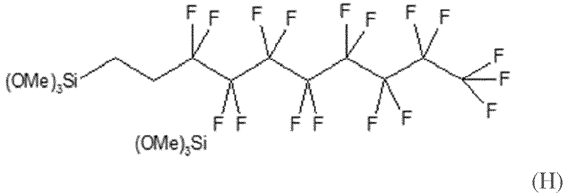 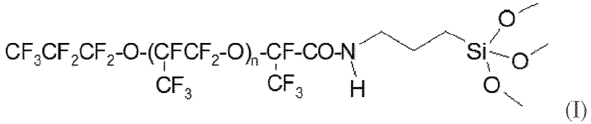 wherein n=6

According to a particularly preferred aspect of the protective coating composition of the present disclosure, the acidified silica nanoparticles comprise mixed hydrophilic and oleophobic surface functionalization, wherein the hydrophilic surface functionalization is obtained by covalently linking the silica nanoparticle to an organofunctional moiety selected from the group of compounds (B), (C) and mixtures thereof, and wherein the oleophobic surface functionalization is obtained by covalently linking the silica nanoparticle to an organofunctional silane selected from the group of compounds (D) to (I), and mixtures thereof.

According to another particularly preferred aspect of the protective coating composition of the present disclosure, the acidified silica nanoparticles comprise mixed hydrophilic and oleophobic surface functionalization, wherein the hydrophilic surface functionalization is obtained by covalently linking the silica nanoparticle to an organofunctional moiety selected to be compound (B), and wherein the oleophobic surface functionalization is obtained by covalently linking the silica nanoparticle to an organofunctional silane selected from the group of compounds (F), (I), and mixtures thereof.

According to still another particularly preferred aspect of the protective coating composition of the present disclosure, the acidified silica nanoparticles comprise mixed hydrophilic and oleophobic surface functionalization, wherein the hydrophilic surface functionalization is obtained by covalently linking the silica nanoparticle to an organofunctional moiety selected to be compound (B), and wherein the oleophobic surface functionalization is obtained by covalently linking the silica nanoparticle to an organofunctional silane selected to be compound (F).

In one exemplary aspect of the protective coating composition of the present disclosure, the mixed hydrophilic and oleophobic surface functionalization is obtained by providing acidified silica nanoparticles having exclusively hydrophilic surface functionalization in combination with acidified silica nanoparticles having exclusively oleophobic surface functionalization. This particular execution of the protective coating composition as described herein is particularly advantageous as it allows excellent flexibility in adjusting and fine-tuning the hydrophilic and oleophobic properties provided by the resulting coating to the ultimate application and/or to the particulars of the treated surface.

According to this particular execution of the protective coating composition, the weight ratio between the acidified silica nanoparticles having exclusively hydrophilic surface functionalization and the acidified silica nanoparticles having exclusively oleophobic surface functionalization is advantageously comprised between 60/40 and 40/60, between 55/45 and 45/55, or even between 52/48 and 48/52. In a more advantageous aspect, the weight ratio between the acidified silica nanoparticles having exclusively hydrophilic surface functionalization and the acidified silica nanoparticles having exclusively oleophobic surface functionalization is 50/50.

In another exemplary aspect of the protective coating composition of the present disclosure, the mixed hydrophilic and oleophobic surface functionalization is obtained by providing acidified silica nanoparticles having both hydrophilic and oleophobic surface functionalization.

According to this other particular execution of the protective coating composition, the ratio between the hydrophilic surface functionalization and the oleophobic surface functionalization is comprised between 60/40 and 40/60, between 55/45 and 45/55, or even between 52/48 and 48/52. In a more advantageous aspect, the ratio between the hydrophilic surface functionalization and the oleophobic surface functionalization is 50/50.

In the context of the present disclosure, the total surface functionalization of the acidified silica nanoparticles for use herein is advantageously greater than 50%, greater than 70%, greater than 80%, greater than 90%, greater than 95%, or even greater than 98%. Preferably, the total surface functionalization of the acidified silica nanoparticles for use herein is advantageously 100%, in order to maximize the hydrophilic and/or oleophobic properties imparted by the corresponding surface functionalized silica nanoparticles for use herein. The surface functionalization of the acidified silica nanoparticles may be determined using techniques commonly known to those skilled in the art of nanoparticles, such as e.g. X-ray photoelectron spectroscopy (XPS) techniques.

The surface functionalization of the (acidified) silica nanoparticles may be accomplished using techniques known in the art of silica nanoparticles. Examples of techniques and methods typically include the step of adding [an organofunctional moiety comprising a functional group selected from the group consisting of polyalkyleneoxy-containing moieties and zwitterionic moieties and/or an organofunctional moiety comprising a functional group selected from fluorine-containing moieties] to silica nanoparticles and allowing the organofunctional moiety to chemical react (via formation of covalent bonds) with the nanoparticles. The surface of the nanoparticles typically includes a group capable of reacting/interacting with the organofunctional moiety, which in turns typically comprises a complementary surface-bonding group. For example, the silanol groups on the surfaces of the silica nanoparticles may be reacted/interacted with at least one complementary surface-bonding group of the organofunctional moiety so as to form a functionalized silica nanoparticle. Exemplary conditions for reacting organofunctional moieties with silica nanoparticles are described in the Examples Section.

According to an advantageous aspect of the protective coating composition of the present disclosure, the surface of each of the acidified silica nanoparticles is functionalized through covalent siloxane bonds between the organofunctional moieties comprising the organic functional groups and the surface of each of said silica nanoparticles.

In a preferred aspect of the protective coating composition according to the present disclosure, the organofunctional moiety is selected from organofunctional silanes, more preferably organic alkoxysilanes.

In a preferred aspect of the present disclosure, the surface of the silica nanoparticles is therefore functionalized with suitable organofunctional silanes, preferably organic alkoxysilanes, through covalent bonds, preferably through covalent siloxane bonds, between the corresponding organofunctional silane, and the complementary reactive groups present on the surface of the silica nanoparticles. Preferably, the silanol groups present on the surfaces of the silica nanoparticles are reacted with the complementary silane group of the organofunctional silane so as to form a siloxane bond.

The protective coating composition of the present disclosure may further comprise optional additives commonly known in the field. Suitable additives will be typically selected depending on the targeted application. Exemplary additives include, but are not limited to, surface-active compounds, corrosion inhibitors, preservatives, complexing agents, galvanization assistants, coating additives, coloring pigments, chelating agents, detergents, stabilizers, dispersants, enzymes, dyes or perfumes.

The protective coating compositions of the present disclosure may be in the form of a solution, emulsion, suspension, dispersion or aerosol, depending on the targeted application. According to a typical aspect, the protective coating composition is in the form of an aqueous dispersion of surface functionalized silica nanoparticles as described above. The protective coating compositions may be designed in any suitable form, depending again on the intended application. In an exemplary aspect, the protective coating composition may be in a sprayable form, or alternatively, in a wipable or dippable form.

The protective coating composition as described herein may be applied using any of a variety of liquid coating techniques (e.g., spraying, rolling, dipping, painting, etc.). In a particular aspect, the step of applying the coating composition is performed by wiping or dipping. For ease and simplicity, the coating formulation may be simply wiped on the substrate to treat using a suitable woven or nonwoven cloth, sponge, or foam. It can be simply dried at room temperature to remove at least a portion of the water or organic solvent that may be included. If desired, the protective coating composition can be heated, after coating, to a temperature above room temperature (typically between 50°C and 150°C) for improved performance through e.g. curing.

The step of applying the protective coating composition may comprise a plurality of individual process steps, including pretreatment steps of the to-be-treated surface. For example, the substrate surface may be cleaned with a suitable preparation before treatment or treated with a suitable physical surface treatment such as e.g. corona or plasma treatment.

The protective coating composition according to the present disclosure are preferably applied to a substrate in a uniform average thickness varying from 50 to 700 nanometers (nm), and preferably less than 500 nm, in order to avoid visible interference color variations in the coating and/or hazy appearance, although other thicknesses may also be used. The optimal average dry coating thickness is dependent upon the particular composition that is coated, but in general the average dry thickness of the protective coating is between 5 and 500 nm, preferably 50 and 400 nm (for example, as estimated from atomic force microscopy and/or surface profilometry), although other thicknesses may be used. Above this range, the dry coating thickness variations may typically cause optical interference effects, leading to visible iridescence (rainbow effect) of the dried coating which is particularly apparent on darker substrates. Below this range the dry coating thickness may be inadequate to confer sufficient durability for most coatings exposed to environmental wear.

After coating the surface of the substrate, the resultant article may be dried at ambient temperatures without the need for heat, radiation or other curing method. Higher temperature may increase the speed of the drying process, although such temperatures may not be practical or convenient and care must be exercised to avoid damage to the substrate.

In another aspect, the present disclosure is directed to a silica nanoparticle which comprise both hydrophilic and oleophobic surface functionalization, wherein the hydrophilic surface functionalization is obtained by covalently linking the silica nanoparticle to an organofunctional moiety comprising a functional group selected from the group consisting of polyalkyleneoxy-containing moieties and zwitterionic moieties, and wherein the oleophobic surface functionalization is obtained by covalently linking the silica nanoparticle to an organofunctional moiety comprising a functional group selected from fluorine-containing moieties.

All particular and preferred aspects relating to the silica nanoparticle, the hydrophilic surface functionalization and the oleophobic surface functionalization as described above in the context of the protective coating composition, are fully applicable to the description of the silica nanoparticle comprising both hydrophilic and oleophobic surface functionalization.

In still another aspect, the present disclosure is directed to a method of manufacturing a silica nanoparticle as described above, which comprises the steps of:
a) providing a composition comprising:
   i. an aqueous continuous liquid phase;
   ii. acidified silica nanoparticles dispersed in the aqueous continuous liquid phase;
   iii. an organofunctional moiety comprising a functional group selected from the group consisting of polyalkyleneoxy-containing moieties and zwitterionic moieties;
   iv. an organofunctional moiety comprising a functional group selected from fluorine-containing moieties; and
b) allowing the acidified silica nanoparticles to (chemically) react with the organofunctional moieties by forming covalent bonds.

All particular and preferred aspects relating to the silica nanoparticle, the hydrophilic surface functionalization and the oleophobic surface functionalization as described above in the context of the protective coating composition, are fully applicable to the description of the method of manufacturing a silica nanoparticle as described above.

In an exemplary aspect of the method of manufacturing a silica nanoparticle, the molar ratio between the organofunctional moiety comprising a functional group selected from the group consisting of polyalkyleneoxy-containing moieties and zwitterionic moieties and the organofunctional moiety comprising a functional group selected from fluorine-containing moieties is comprised between 60/40 and 40/60, between 55/45 and 45/55, or even between 52/48 and 48/52. Advantageously, the molar ratio between the organofunctional moiety comprising a functional group selected from the group consisting of polyalkyleneoxy-containing moieties and zwitterionic moieties and the organofunctional moiety comprising a functional group selected from fluorine-containing moieties is 50/50.

According to an exemplary aspect of the method of manufacturing a silica nanoparticle, the total surface functionalization of the acidified silica nanoparticles is greater than 50%, greater than 70%, greater than 80%, greater than 90%, greater than 95%, or even greater than 98%. More advantageously, the total surface functionalization of the acidified silica nanoparticles is 100%.

In an advantageous aspect of the method of manufacturing a silica nanoparticle, the aqueous continuous liquid phase further comprises an organic solvent, in particular a polar solvent.

As already indicated above, the inclusion of an organic solvent in the aqueous continuous liquid phase of the coating composition was found to beneficially impact the preparation of the protective coating compositions wherein the mixed hydrophilic and oleophobic surface functionalization is obtained by providing acidified silica nanoparticles having both hydrophilic and oleophobic surface functionalization. More specifically, it has been found that the presence of an organic solvent in the aqueous continuous liquid phase allows reducing and even preventing unwanted phase separation during the surface functionalization of the silica nanoparticles , which advantageously results into protective coatings provided not only with improved optical properties (in particular transparency, homogeneity and streak-free appearance) and improved coatability, but also with improved hydrophilic and oleophobic functionalization.

According to an exemplary aspect of the method of manufacturing a silica nanoparticle, the organic solvent is selected from the group of alcohols, in particular from the group consisting of n-hexanol, 2-butoxyethanol, and any combinations thereof.

In a typical aspect of the method of manufacturing a silica nanoparticle, the aqueous continuous liquid phase comprises an organic solvent in an amount greater than 1 wt%, greater than 2 wt%, greater than 5 wt%, greater than 8 wt%, or even greater than 10 wt%, based on the weight of the overall composition.

In another aspect, the present disclosure is directed to a method of treating a hard surface comprising the steps of:
a) providing a protective coating composition as described above;
b) applying the protective coating composition to the hard surface thereby forming a layer of the coating composition adjacent to the hard surface; and
c) optionally, drying and/or curing the layer of the coating composition thereby forming a protective coating layer adjacent to the hard surface.

In still another aspect, the present disclosure is directed to a method of imparting hydrophilic and oleophobic properties to a hard surface, which comprises the steps of:
a) providing a protective coating composition as described above;
b) applying the protective coating composition to the hard surface thereby forming a layer of the coating composition adjacent to the hard surface; and
c) optionally, drying and/or curing the layer of the coating composition thereby forming a protective coating layer adjacent to the hard surface.

In a typical aspect, the treated hard surface comprises a material selected from the group consisting of siliceous substrates, glass surfaces, plastic surfaces, thermoset polymeric surfaces, thermoplastic polymeric surfaces, organic polymeric substrates, ceramic surfaces, cement surfaces, stone surfaces, painted or clearcoated surfaces, metal surfaces, wood, wood laminate, polyurethane-coated wood, and any combinations thereof.

According to an advantageous aspect, the hard surface is translucent or preferably transparent, and is preferably selected from the group consisting of glass surfaces, thermoplastic polymeric surfaces, organic polymeric substrates, ceramic surfaces, and any combinations thereof. In a more preferred aspect, the hard surface comprises a material selected from the group consisting metal and glass, in particular glass. The protective coating composition of the present disclosure are particularly suitable for imparting easy-to-clean properties to hard surfaces.

According to a particular aspect of the methods, the drying/curing step, in particular the curing step, is performed at temperatures comprised between 20°C and 35°C, or even between 20°C and 30°C.

In another typical aspect, the drying/curing step, in particular the curing step, is performed at temperatures typically comprised between 50°C and 150°C, between 50°C and 100°C, or even between 60°C and 90°C.

According to still another aspect, the present disclosure is directed to a coated article comprising a substrate and a coating layer adjacent to at least part of the surface of the substrate, wherein the coating layer comprises a layer of the protective coating composition as described above, which has been dried and/or cured onto the surface of the substrate.

According to an advantageous aspect of the coated article of the present disclosure, the substrate is a hard surface comprising typically a material selected from the group consisting of siliceous substrates, glass surfaces, plastic surfaces, thermoset polymeric surfaces, thermoplastic polymeric surfaces, organic polymeric substrates, ceramic surfaces, cement surfaces, stone surfaces, painted or clearcoated surfaces, metal surfaces, wood, wood laminate, polyurethane-coated wood, and any combinations thereof. Preferably, the hard surface comprises a material selected from the group consisting of metal and glass, in particular glass.

According to an advantageous aspect, the coated article of the present disclosure has a static water contact angle of less than 50°, less than 40°, less than 30°, less than 20°, less than 15°, or even less than 10°, when measured according to the static water contact angle measurement method described in the experimental section.

According to another advantageous aspect, the coated article of the present disclosure has a static hexadecane contact angle of more than 35°, more than 40°, more than 45°, more than 50°, more than 55°, more than 60°, or even more than 65°, when measured according to the static hexadecane contact angle measurement method described in the experimental section.

All particular and preferred aspects relating to the silica nanoparticle, the hydrophilic surface functionalization and the oleophobic surface functionalization as described above in the context of the protective coating composition, are fully applicable to the description of the coated article as described above.

A silica nanoparticle protective coating layer obtained from a coating composition comprising acidified silica nanoparticles as described above, after said coating composition has been subjected to an appropriate drying/curing step comprises the so-called "sintered silica nanoparticles". Without wishing to be bound by theory, it is believed that the silica nanoparticle coating comprising sintered silica nanoparticles, as described herein, comprises an aggregate or agglomeration of silica nanoparticles linked together so as to form a porous three-dimensional network. The term "porous" refers to the presence of voids between the silica nanoparticles created when the particles form a continuous coating. Light-scattering measurements on acidified dispersion solutions comprising acidified silica nanoparticles indicate that these silica nanoparticles do tend to agglomerate, providing (after coating and drying) three-dimensional porous networks of silica nanoparticles where each nanoparticle appears to be firmly bonded to adjacent nanoparticles. Micrographs reveal such bonds as silica "necks" between adjacent particles which are created by the acid in the absence of silica sources such as tetraalkoxysilanes. Their formation is attributed to the catalytic action of strong acid in making and breaking siloxane bonds.

Without wishing to be bound by theory, it is believed that the chemical bonds between acidified silica nanoparticles are formed through acid-catalyzed siloxane bonding in combination with protonated silanol groups at the nanoparticle surfaces and these acid catalyzed sinter-bonded silica nanoparticles are believed to explain the improved abrasion resistance and durability of the resulting protective coating.

According to still another aspect, the present disclosure relates to the use of a protective coating composition or a silica nanoparticle as described above for protecting a hard surface which typically comprises a material selected from the group consisting of metal and glass, in particular glass.

In yet another aspect, the present disclosure relates to the use of a protective coating composition or a silica nanoparticle as described above for imparting easy-to-clean properties to a hard surface, in particular easy-to-clean properties towards oily contamination.
Item 1 is a protective coating composition comprising:
   a) an aqueous continuous liquid phase; and
   b) acidified silica nanoparticles dispersed in the aqueous continuous liquid phase, wherein the acidified silica nanoparticles comprise mixed hydrophilic and oleophobic surface functionalization, wherein the hydrophilic surface functionalization is obtained by covalently linking the silica nanoparticle to an organofunctional moiety comprising a functional group selected from the group consisting of polyalkyleneoxy-containing moieties and zwitterionic moieties, and wherein the oleophobic surface functionalization is obtained by covalently linking the silica nanoparticle to an organofunctional moiety comprising a functional group selected from fluorine-containing moieties.
Item 2 is a protective coating composition according to item 1, wherein the mixed hydrophilic and oleophobic surface functionalization is obtained by providing either:
   a) acidified silica nanoparticles having exclusively hydrophilic surface functionalization in combination with acidified silica nanoparticles having exclusively oleophobic surface functionalization; or
   b) acidified silica nanoparticles having both hydrophilic and oleophobic surface functionalization.
Item 3 is a protective coating composition according to item 1 or 2, wherein the mixed hydrophilic and oleophobic surface functionalization is obtained by providing acidified silica nanoparticles having exclusively hydrophilic surface functionalization in combination with acidified silica nanoparticles having exclusively oleophobic surface functionalization.
Item 4 is a protective coating composition according to item 1 or 2, wherein the mixed hydrophilic and oleophobic surface functionalization is obtained by providing acidified silica nanoparticles having both hydrophilic and oleophobic surface functionalization.
Item 5 is a protective coating composition according to any of the preceding items, wherein the organofunctional moiety is selected from organofunctional silanes, preferably organic alkoxysilanes.
Item 6 is protective coating composition according to any of the preceding items, wherein the surface of each of the acidified silica nanoparticles is functionalized with a functional group selected from the group consisting of polyalkyleneoxy-containing moieties and zwitterionic moieties, and/or with a functional group selected from fluorine-containing moieties.
Item 7 is protective coating composition according to item 6, wherein the surface of each of the acidified silica nanoparticles is functionalized through covalent siloxane bonds between the organofunctional moieties comprising the organic functional groups and the surface of each of said silica nanoparticles.
Item 8 is a protective coating composition according to any of the preceding items, wherein the polyalkyleneoxy-containing moieties comprise at least 3 alkyleneoxy units, at least 5 alkyleneoxy units, at least 7 alkyleneoxy units, or even at least 10 alkyleneoxy units.
Item 9 is protective coating composition according to any of the preceding items, wherein the polyalkyleneoxy-containing moieties comprise from 3 to 30, from 3 to 20 or even from 3 to 10 alkyleneoxy units.
Item 10 is a protective coating composition according to any of the preceding items, wherein the polyalkyleneoxy-containing moieties have the general formula (I):

   -(-O-CH(R¹)-CH₂-)ₙ-O-R² (I)

   wherein:
   n is an integer of at least 3, at least 5, at least 10, or even comprised between 3 and 30 ;
   R¹ is H or CH₃; and
   R² is H or an alkyl group having from 1 to 20 carbon atoms, from 1 to 10 carbon atoms, from 1 to 5 carbon atoms, or even from 2 to 3 carbon atoms.
Item 11 is a protective coating composition according to any of the preceding items, wherein the organofunctional moiety comprising a functional group selected from the group consisting of polyalkyleneoxy-containing moieties has the following general formula (II):

   (R⁴)₃₋ₘ(R³O)ₘ-Si-X-(-O-CH(R¹)-CH₂-)ₙ-O-R² (II)

   wherein:
   n is an integer of at least 3, at least 5, at least 10, or even comprised between 3 and 30 ;
   R¹ is H or CH₃;
   m is an integer from 0 to 3;
   R² is H or an alkyl group having from 1 to 20 carbon atoms, from 1 to 10 carbon atoms, from 1 to 5 carbon atoms, or even from 2 to 3 carbon atoms;
   R³ and R⁴ are independently an alkyl group having from 1 to 8 carbon atoms, from 1 to 6 carbon atoms, or even from 1 to 4 carbon atoms; and
   X is a divalent linking group, preferably independently selected from the group consisting of alkyl, alkoxy, acyloxy, or carbamoyl.
Item 12 is a protective coating composition according to item 11, wherein the organofunctional silane has one of the following formula: 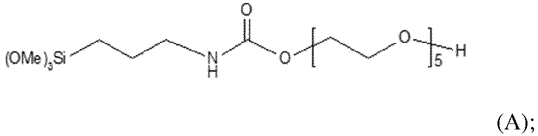 or 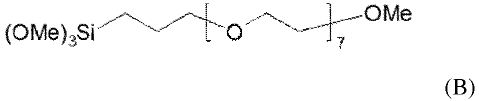
Item 13 is a protective coating composition according to any of the preceding items, wherein the zwitterionic moieties comprise functional groups selected from the group consisting of sulfonate groups, sulfate groups, phosphonate groups, phosphate groups, carboxylate groups, quaternary ammonium groups, sulfonium groups, phosphonium groups, and any combinations thereof.
Item 14 is a protective coating composition according to any of the preceding items, wherein the zwitterionic moiety comprises a positively charged group selected from quaternary ammonium groups, sulfonium groups, phosphonium groups; and a negatively charged group selected from sulfonate groups, sulfate groups, phosphonate groups, phosphate groups, carboxylate groups.
Item 15 is a protective coating composition according to any of the preceding items, wherein the zwitterionic moiety comprises a positively charged group selected from quaternary ammonium groups, and a negatively charged group selected from sulfonate groups and phosphate groups.
Item 16 is a protective coating composition according to any of the preceding items, wherein the zwitterionic moiety comprises a positively charged group selected from quaternary ammonium groups, and a negatively charged group selected from sulfonate groups.
Item 17 is a protective coating composition according to any of items 1 to 16, wherein the zwitterionic moiety comprises a positively charged group selected from quaternary ammonium groups, and a negatively charged group selected from phosphate groups.
Item 18 is a protective coating composition according to any of the preceding items, wherein the zwitterionic moiety has the general formula (III):

   -A-Y-B-Z (III)

   wherein:
   A and B are linking groups, which are the same or different moieties, and which are independently selected from the group of alkylene or oxyalkylene groups;
   Y and Z are interchangeably the positively charged group or the negatively charged group of the zwitterionic moieties.
Item 19 is a protective coating composition according to item 18, wherein:
   A and B are independently selected from the group of alkylene groups, in particular alkylene groups comprising from 1 to 8 carbon atoms, from 1 to 6 carbon atoms, or even from 1 to 4 carbon atoms;
   Y and Z are interchangeably selected from the group consisting of sulfonate groups, sulfate groups, phosphonate groups, phosphate groups, carboxylate groups, quaternary ammonium groups, sulfonium groups, phosphonium groups, and any combinations thereof.
Item 20 is a protective coating composition according to item 18 or 19, wherein:
   A and B are independently selected from the group of alkylene groups comprising from 1 to 6 carbon atoms, or even from 1 to 4 carbon atoms;
   Y and Z are interchangeably selected from the group consisting of sulfonate groups, phosphonate groups, and quaternary ammonium groups.
Item 21 is a protective coating composition according to any of items 18 to 20, wherein:
   A and B are independently selected from the group of alkylene groups comprising from 1 to 4 carbon atoms, in particular propyl and butyl;
   Y is selected from the group consisting of ammonium groups; and
   Z is selected from the group consisting of sulfonate groups.
Item 22 is a protective coating composition according to any of the preceding items, wherein the organofunctional moiety comprising a functional group selected from the group consisting of zwitterionic moieties has the following general formula (IV):

   (R⁶)₃₋ₚ(R⁵O)ₚ-Si-A-Y-B-Z (IV)

   wherein:
   R⁵ and R⁶ are independently an alkyl group having from 1 to 8 carbon atoms, from 1 to 6 carbon atoms, or even from 1 to 4 carbon atoms;
   p is an integer from 0 to 3;
   A and B are linking groups, which are the same or different moieties, and which are independently selected from the group of alkylene or oxyalkylene groups; and
   Y and Z are interchangeably the positively charged group or the negatively charged group of the zwitterionic moieties.
Item 23 is a protective coating composition according to item 22, wherein the organofunctional silane has the following formula: 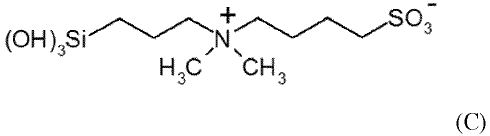
Item 24 is a protective coating composition according to any of the preceding items, wherein the fluorine-containing moieties of the organofunctional moiety comprising a functional group selected from fluorine-containing moieties are selected from the group consisting of fluoroalkyl groups, perfluoroalkyl groups, fluorooxyalkyl groups, perfluorooxyalkyl groups, fluoroalkylene groups, perfluoroalkylene groups, fluorooxyalkylene groups, perfluorooxyalkylene groups, perfluoropolyether groups, and any combinations thereof.
Item 25 is a protective coating composition according to any of the preceding items, wherein the fluorine-containing moieties of the organofunctional moiety comprising a functional group selected from fluorine-containing moieties are selected from the group consisting of fluoroalkyl groups, perfluoroalkyl groups, fluorooxyalkyl groups, perfluorooxyalkyl groups, perfluorooxyalkylene groups, perfluoropolyether groups, and any combinations thereof.
Item 26 is a protective coating composition according to any of the preceding items, wherein the fluorine-containing moieties of the organofunctional moiety comprising a functional group selected from fluorine-containing moieties are selected from the group consisting of perfluoroalkyl groups, perfluorooxyalkyl groups, perfluoropolyether groups, perfluorooxyalkylene groups, in particular perfluorooxyalkylene oligomeric groups, and any combinations thereof.
Item 27 is a protective coating composition according to any of the preceding items, wherein the fluorine-containing moieties of the organofunctional moiety comprising a functional group selected from fluorine-containing moieties have the general formula (V):

   - C - V - Rf (V)

   wherein:
   C is a linking group selected from the group of alkylene groups, oxyalkylene groups;
   V is selected from -C(O)NH- or -CH₂-; and
   Rf is the fluorine-containing moiety.
Item 28 is a protective coating composition according to item 27, wherein:
   C is selected from the group of alkylene groups comprising from 1 to 8 carbon atoms, from 1 to 6 carbon atoms, or even from 1 to 4 carbon atoms;
   V is selected to be -CH₂-; and
   Rf is selected from the group of perfluoroalkyl groups or perfluorooxyalkyl groups, preferably comprising a linear or branched alkyl group comprising from 1 to 8 carbon atoms, from 2 to 8 carbon atoms, from 2 to 6 carbon atoms, or even from 2 to 4 carbon atoms.
Item 29 is a protective coating composition according to item 27, wherein:
   C is selected from the group of alkylene groups comprising from 1 to 8 carbon atoms, from 1 to 6 carbon atoms, or even from 1 to 4 carbon atoms;
   V is selected to be -C(O)NH-; and
   Rf is selected from the group of perfluoropolyether groups and perfluorooxyalkylene oligomeric moieties.
Item 30 is a protective coating composition according to items 5 to 29, wherein the organofunctional moiety comprising a functional group selected from fluorine-containing moieties has the following general formula (VI):

   (R⁸)_{3-q}(R⁷O)_{q}-Si-C-V-Rf (VI)

   wherein:
   R⁷ and R⁸ are independently an alkyl group having from 1 to 8 carbon atoms, from 1 to 6 carbon atoms, or even from 1 to 4 carbon atoms;
   q is an integer from 0 to 3;
   C is a linking group selected from the group of alkylene groups, oxyalkylene groups;
   V is selected from -C(O)NH- or -CH₂-; and
   Rf is the fluorine-containing moiety.
Item 31 is a protective coating composition according to item 30, wherein the organofunctional silane has one of the following formula: 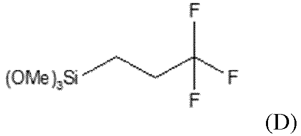 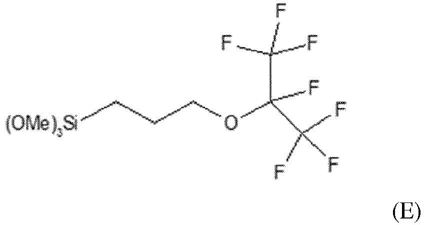 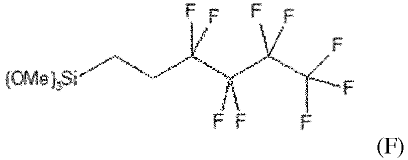 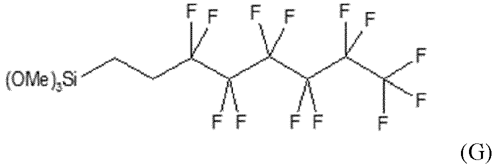 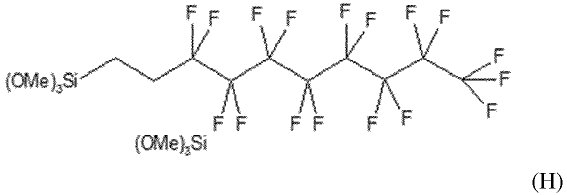 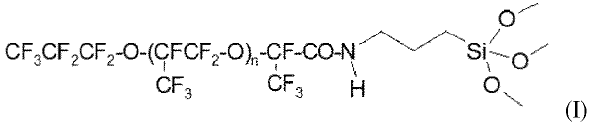 wherein n=6
Item 32 is a protective coating composition according to any of the preceding items, which comprises acidified silica nanoparticles dispersed in the aqueous continuous liquid phase, wherein the acidified silica nanoparticles comprise mixed hydrophilic and oleophobic surface functionalization, wherein the hydrophilic surface functionalization is obtained by covalently linking the silica nanoparticle to an organofunctional moiety selected from the group of compounds (B), (C) and mixtures thereof, and wherein the oleophobic surface functionalization is obtained by covalently linking the silica nanoparticle to an organofunctional silane selected from the group of compounds (D) to (I), and mixtures thereof.
Item 33 is a protective coating composition according to any of the preceding items, which comprises acidified silica nanoparticles dispersed in the aqueous continuous liquid phase, wherein the acidified silica nanoparticles comprise mixed hydrophilic and oleophobic surface functionalization, wherein the hydrophilic surface functionalization is obtained by covalently linking the silica nanoparticle to an organofunctional moiety selected to be compound (B), and wherein the oleophobic surface functionalization is obtained by covalently linking the silica nanoparticle to an organofunctional silane selected from the group of compounds (F), (I), and mixtures thereof.
Item 34 is a protective coating composition according to any of the preceding items, which comprises acidified silica nanoparticles dispersed in the aqueous continuous liquid phase, wherein the acidified silica nanoparticles comprise mixed hydrophilic and oleophobic surface functionalization, wherein the hydrophilic surface functionalization is obtained by covalently linking the silica nanoparticle to an organofunctional moiety selected to be compound (B), and wherein the oleophobic surface functionalization is obtained by covalently linking the silica nanoparticle to an organofunctional silane selected to be compound (F).
Item 35 is a protective coating composition according to any of the preceding items, which comprises:
   a) an aqueous dispersion of silica nanoparticles having mixed hydrophilic and oleophobic surface functionalization into an aqueous continuous liquid phase (or a solvent comprising water); and
   b) an acid having a pKa of less than 5, less than 3, less than 2, or even less than 0.
Item 36 is a protective coating composition according to any of the preceding items, which has a pH of less than 5, less than 4, less than 3, or even less than 2.
Item 37 is a protective coating composition according to any of the preceding items, wherein the concentration of the surface functionalized silica nanoparticles is comprised between 0.1 and 15 wt%, between 0.2 and 10 wt%, between 0.3 and 8 wt%, between 0.5 and 5 wt%, between 0.5 and 3 wt% in the coating composition.
Item 38 is a protective coating composition according to any of the preceding items, wherein the non-surface functionalized silica nanoparticles have an average particle diameter comprised between 1 and 150 nanometers, between 2 and 100 nanometers, or even between 3 and 80 nanometers.
Item 39 is a protective coating composition according to any of the preceding items, wherein the non-surface functionalized silica nanoparticles have an average particle diameter comprised between 1 and 20 nanometers, between 2 and 15 nanometers, between 3 and 10 nanometers, or even between 4 and 8 nanometers.
Item 40 is a protective coating composition according to any of the preceding items, wherein the non-surface functionalized silica nanoparticles have an average particle diameter comprised between 10 and 150 nanometers, between 20 and 120 nanometers, between 30 and 100 nanometers, or even between 50 and 90 nanometers.
Item 41 is a protective coating composition according to any of the preceding items, wherein the mixed hydrophilic and oleophobic surface functionalization is obtained by providing acidified silica nanoparticles having exclusively hydrophilic surface functionalization in combination with acidified silica nanoparticles having exclusively oleophobic surface functionalization.
Item 42 is a protective coating composition according to item 41, wherein the weight ratio between the acidified silica nanoparticles having exclusively hydrophilic surface functionalization and the acidified silica nanoparticles having exclusively oleophobic surface functionalization is comprised between 60/40 and 40/60, between 55/45 and 45/55, or even between 52/48 and 48/52.
Item 43 is a protective coating composition according to item 41, wherein the weight ratio between the acidified silica nanoparticles having exclusively hydrophilic surface functionalization and the acidified silica nanoparticles having exclusively oleophobic surface functionalization is 50/50.
Item 44 is a protective coating composition according to items 1 to 40, wherein the mixed hydrophilic and oleophobic surface functionalization is obtained by providing acidified silica nanoparticles having both hydrophilic and oleophobic surface functionalization.
Item 45 is a protective coating composition according to item 44, wherein the ratio between the hydrophilic surface functionalization and the oleophobic surface functionalization is comprised between 60/40 and 40/60, between 55/45 and 45/55, or even between 52/48 and 48/52.
Item 46 is a protective coating composition according to item 44, wherein the ratio between the hydrophilic surface functionalization and the oleophobic surface functionalization is 50/50.
Item 47 is a protective coating composition according to any of the preceding items, wherein the total surface functionalization of the acidified silica nanoparticles is greater than 50%, greater than 70%, greater than 80%, greater than 90%, greater than 95%, or even greater than 98%.
Item 48 is a protective coating composition according to item 47, wherein the total surface functionalization of the acidified silica nanoparticles is 100%.
Item 49 is a protective coating composition according to any of items 44 to 48, wherein the aqueous continuous liquid phase further comprises an organic solvent, in particular a polar solvent.
Item 50 is a protective coating composition according to item 49, wherein the organic solvent is selected from the group of alcohols, in particular from the group consisting of n-hexanol, 2-butoxyethanol, and any combinations thereof.
Item 51 is a protective coating composition according to any of items 49 or 50, which comprises an organic solvent in an amount greater than 1 wt%, greater than 2 wt%, greater than 5 wt%, greater than 8 wt%, or even greater than 10 wt%, based on the weight of the overall coating composition.
Item 52 is a protective coating composition according to any of items 49 to 51, which comprises an organic solvent in an amount comprised between 2 and 20 wt%, between 3 and 15 wt%, between 5 and 12 wt%, or even between 6 and 10 wt%, based on the weight of the overall coating composition.
Item 53 is a silica nanoparticle as described in any of the preceding items, which comprise both hydrophilic and oleophobic surface functionalization, wherein the hydrophilic surface functionalization is obtained by covalently linking the silica nanoparticle to an organofunctional moiety comprising a functional group selected from the group consisting of polyalkyleneoxy-containing moieties and zwitterionic moieties, and wherein the oleophobic surface functionalization is obtained by covalently linking the silica nanoparticle to an organofunctional moiety comprising a functional group selected from fluorine-containing moieties.
Item 54 is a method of manufacturing a silica nanoparticle according to item 53, which comprises the steps of:
   a) providing a composition comprising:
      i. an aqueous continuous liquid phase;
      ii. acidified silica nanoparticles dispersed in the aqueous continuous liquid phase;
      iii. an organofunctional moiety comprising a functional group selected from the group consisting of polyalkyleneoxy-containing moieties and zwitterionic moieties;
      iv. an organofunctional moiety comprising a functional group selected from fluorine-containing moieties; and
   b) allowing the acidified silica nanoparticles to (chemically) react with the organofunctional moieties by forming covalent bonds.
Item 55 is a method according to item 54, wherein the molar ratio between the organofunctional moiety comprising a functional group selected from the group consisting of polyalkyleneoxy-containing moieties and zwitterionic moieties and the organofunctional moiety comprising a functional group selected from fluorine-containing moieties is comprised between 60/40 and 40/60, between 55/45 and 45/55, or even between 52/48 and 48/52.
Item 56 is a method according to any of item 54 or 55, wherein the molar ratio between the organofunctional moiety comprising a functional group selected from the group consisting of polyalkyleneoxy-containing moieties and zwitterionic moieties and the organofunctional moiety comprising a functional group selected from fluorine-containing moieties is 50/50.
Item 57 is a method according to any of items 54 to 56, wherein the total surface functionalization of the acidified silica nanoparticles is greater than 50%, greater than 70%, greater than 80%, greater than 90%, greater than 95%, or even greater than 98%.
Item 58 is a method according to any of items 54 to 57, wherein the total surface functionalization of the acidified silica nanoparticles is 100%.
Item 59 is a method according to any of items 54 to 58, wherein the aqueous continuous liquid phase further comprises an organic solvent, in particular a polar solvent.
Item 60 is a method according to any of items 54 to 59, wherein the organic solvent is selected from the group of alcohols, in particular from the group consisting of n-hexanol, 2-butoxyethanol, and any combinations thereof.
Item 61 is a method according to any of items 54 to 59, wherein the aqueous continuous liquid phase comprises an organic solvent in an amount greater than 1 wt%, greater than 2 wt%, greater than 5 wt%, greater than 8 wt%, or even greater than 10 wt%, based on the weight of the overall composition.
Item 62 is a method of treating a hard surface comprising the steps of:
   a) providing a protective coating composition according to any of items 1 to 52;
   b) applying the protective coating composition to the hard surface thereby forming a layer of the coating composition adjacent to the hard surface; and
   c) optionally, drying and/or curing the layer of the coating composition thereby forming a protective coating layer adjacent to the hard surface.
Item 63 is method of imparting hydrophilic and oleophobic properties to a hard surface, which comprises the steps of:
   a) providing a protective coating composition according to any of items 1 to 52;
   b) applying the protective coating composition to the hard surface thereby forming a layer of the coating composition adjacent to the hard surface; and
   c) optionally, drying and/or curing the layer of the coating composition thereby forming a protective coating layer adjacent to the hard surface.
Item 64 is a method according to any of item 62 or 63, wherein the hard surface comprises a material selected from the group consisting of siliceous substrates, glass surfaces, plastic surfaces, thermoset polymeric surfaces, thermoplastic polymeric surfaces, organic polymeric substrates, ceramic surfaces, cement surfaces, stone surfaces, painted or clearcoated surfaces, metal surfaces, wood, wood laminate, polyurethane-coated wood, and any combinations thereof.
Item 65 is method according to any of items 62 to 64, wherein the hard surface is translucent or preferably transparent, and is preferably selected from the group consisting of glass surfaces, thermoplastic polymeric surfaces, organic polymeric substrates, ceramic surfaces, and any combinations thereof.
Item 66 is a method according to any of items 62 to 65, wherein the hard surface comprises a material selected from the group consisting metal and glass, in particular glass.
Item 67 is a method according to any of items 62 to 66, wherein the drying/curing step, in particular the curing step, is performed at temperatures comprised between 20°C and 35°C, or even between 20°C and 30°C.
Item 68 is a method according to any of items 62 to 66, wherein the drying/curing step, in particular the curing step, is performed at temperatures typically comprised between 50°C and 150°C, between 50°C and 100°C, or even between 60°C and 90°C.
Item 69 is a coated article comprising a substrate and a coating layer adjacent to at least part of the surface of the substrate, wherein the coating layer comprises a layer of the protective coating composition according to any of items 1 to 52 which has been dried and/or cured onto the surface of the substrate.
Item 70 is a coated article according to item 69, wherein the substrate is a hard surface comprising a material selected from the group consisting of siliceous substrates, glass surfaces, plastic surfaces, thermoset polymeric surfaces, thermoplastic polymeric surfaces, organic polymeric substrates, ceramic surfaces, cement surfaces, stone surfaces, painted or clearcoated surfaces, metal surfaces, wood, wood laminate, polyurethane-coated wood, and any combinations thereof.
Item 71 is a coated article according to any of item 69 or 70, wherein the hard surface comprises a material selected from the group consisting of metal and glass, in particular glass.
Item 72 is a coated article according to any of items 69 to 71, which has a static water contact angle of less than 50°, less than 40°, less than 30°, less than 20°, less than 15°, or even less than 10°, when measured according to the static water contact angle measurement method described in the experimental section.
Item 73 is a coated article according to any of items 69 to 72, which has a static hexadecane contact angle of more than 35°, more than 40°, more than 45°, more than 50°, more than 55°, more than 60°, or even more than 65°, when measured according to the static hexadecane contact angle measurement method described in the experimental section.
Item 74 is the use of a protective coating composition according to any of items 1 to 52 or a silica nanoparticle according to item 53 for protecting a hard surface which typically comprises a material selected from the group consisting of metal and glass, in particular glass.
Item 75 is the use according to item 74, for imparting easy-to-clean properties to the hard surface, in particular easy-to-clean properties towards oily contamination.

### EXAMPLES

The present disclosure is further illustrated by the following examples. These examples are merely for illustrative purposes only and are not meant to be limiting on the scope of the appended claims.

### Test methods and procedures:

### Contact Angle Measurement

Static contact angle measurements are performed using Millipore water (WCA) or hexadecane (HCA, analytical grade) with a Krüss DSA100 contact angle analyzer. Contact angle is measured on sessile drop (3 µL) and is measured 30 sec after deposition. The values reported are the average of at least 4 separate measurements.

### Materials employed:

In the examples, the following raw materials are used:
**2-[Methoxy(polyethyleneoxy)-propyl]trimethoxysilane (H7)** is commercially available as a 90% solution in water from Gelest.

**Zwitterionic silane (ZS)** is prepared according to the following procedure: To 4.97 g 3-(dimethylaminopropyl)trimethoxysilane in 8.22 g DI water, 3.26 g 1,4-butane sulfone are added (1:1 molar ratio). The solution is kept at 75°C for 14 h. The resulting 50wt% solution contained the zwitterionic silane compound.

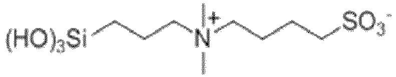

**(3,3,3-Trifluoropropyl)trimethoxysilane (C1F)** is commercially available as a 97% solution in water from Gelest.

**3-(Heptafluoroisopropoxy)-propyltrimethoxysilane (C3F)** is commercially available as a 97% solution in water from Gelest.

**Nonafluorohexyl trimethoxysilane (C4F)** is commercially available as a 97% solution in water from Gelest.

**1H,1H,2H,2H-Perfluorooctyl-trimethoxysilane (C6F)** is commercially available as a 97% solution in water from Gelest.

**(Heptadecafluoro-1,1,2,2-tetrahydrodecyl)trimethoxysilane (C8F)** is commercially available as a 95% solution in water from Gelest.

**HFPO silane (HFPO),** is an oligomer having a weight average molecular weight of 1498 g/mol, obtained from 3M Belgium (Belgium, Zwijndrecht). Alternatively, it can be synthesized by the reaction of the corresponding HFPO-oligomer methyl ester with N,N-dimethylaminopropylamine and 3-chloropropyltrimethoxysilane according to the procedure described in WO 2009/045993 (example 1).

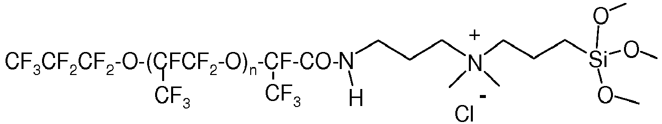

**Trimethoxy(octyl)silane (C8)** is commercially available as a 96% solution in water from Sigma-Aldrich.

**LEVASIL 500/15** are 6 nm spherical silica nanoparticles available from Akzo Nobel as a 15 wt% solution in water (pH 10).

**NALCO 2329** are 75 nm spherical particles available from Nalco as 40wt% solution in water (pH 10).

**Phosphoric acid** is commercially available as a 85% solution in water from Applichem.

### Preparation of the coating compositions including functionalization of the silica nanoparticles:

Unless otherwise stated, the coating compositions are prepared according to the following procedure: 100 g of the aqueous silica nanoparticle dispersion (including the optional organic solvent) are weighed into a glass jar. Under continuous stirring the appropriate amount of functional silane is slowly added. The appropriate amount of functional silane is determined according to Table 1 below. The dispersion is then heated to 60°C and stirred for 24 h. The obtained dispersions are acidified with phosphoric acid (pH 2) just prior to coating.

**Table 1:**

| Silica particle type | Average particle diameter | Total surface functionalization | mmol of functionalization agent for 1 g SiO₂ |
|---|---|---|---|
| NALCO 2329 | 75 nm | 100% | 0.165 |
| Levasil 500/15 | 6 nm | 100% | 3.100 |
| NALCO 2329 | 75 nm | 50% | 0.082 |
| Levasil 500/15 | 6 nm | 50% | 1.550 |

### Coating Procedure:

### Coating of the functionalized nanosilica particles containing coating solutions:

Prior to testing, float glass test substrates (available from Rocholl GmbH, Germany, with the following dimensions: 100x100mm) are wiped clean with isopropanol and dried at room temperature for 5 min. The coating dispersions are either applied with a paper wipe or with a Mayer Bar on the non-tin side of the glass test substrate (detection with UV lamp (254 nm)). It is then cured at the appropriate temperature (60°C or room temperature) for 24 hours. The coated sample is then submitted to the test and analysis procedures described above.

### Coating of the functional silanes containing coating solutions:

Prior to testing, float glass test substrates (available from Rocholl GmbH, Germany, with the following dimensions: 100x100mm) are wiped clean with isopropanol and dried at room temperature for 5 min. The coating solutions are simply prepared by adding the appropriate amount of the functional silanes in isopropanol so as to form a 5wt% solution. The coating solutions are either applied with a paper wipe or with a Mayer Bar on the non-tin side of the glass test substrate (detection with UV lamp (254 nm)). It is then dried at room temperature for 24 hours. The coated sample is then submitted to the test and analysis procedures described above.

### Examples:

Examples 1 to 3 and comparative examples C1 to C5: Oleophobic and hydrophilic properties of coating compositions comprising acidified silica nanoparticles having exclusively hydrophilic surface functionalization in combination with acidified silica nanoparticles having exclusively oleophobic surface functionalization.

Examples 1 to 3 use protective coating compositions comprising a combination of acidified silica nanoparticles having exclusively hydrophilic surface functionalization and acidified silica nanoparticles having exclusively oleophobic surface functionalization. Examples C1 to C5 are comparative examples. All the described coating compositions have a pH of 1 and a concentration of surface functionalized silica nanoparticles of 0.75 wt%. The coating formulations used in the experiments are applied on a glass plate then dried at room temperature for 24 hours. The data presented in Table 2 reflect the oleophobic and hydrophilic properties of the various coating compositions.

**Table 2:**

| Example | Functional Silane | | Average particle diameter | | Total Surface functionalization | Ratio A/B | WCA [°] | HCA [°] |
|---|---|---|---|---|---|---|---|---|
| | A | B | | | | | | |
| 1 | H7 | C4F | 6 nm | 6 nm | 100% | 1 / 1 | 5 | 58 |
| 2 | H7 | C4F | 6 nm | 6 nm | 50% | 1 / 1 | 13 | 60 |
| 3 | H7 | HFPO | 6 nm | 75 nm | 100% | 1 / 1 | 7 | 61 |
| C1 | H7 | | 6 nm | | 50% | - | 8 | 5 |
| C2 | H7 | | 6 nm | | 100% | - | 6 | < 5 |
| C3 | C4F | | 6 nm | | 50% | - | 43 | 55 |
| C4 | C4F | | 6 nm | | 100% | - | 76 | 55 |
| C5 | HFPO | | 75 nm | | 100% | - | 74 | 69 |

As shown in Table 2, protective coating compositions according to the present disclosure combine both excellent oleophobic properties (HCA > 55°) and excellent hydrophilic properties (WCA < 15°). In contrast, coating compositions not according to the disclosure are deficient in either hydrophilic or oleophobic properties.

Examples 4 to 9: Oleophobic and hydrophilic properties of protective coating compositions comprising acidified silica nanoparticles having both hydrophilic and oleophobic surface functionalization.

Examples 4 to 9 use protective coating compositions acidified silica nanoparticles having both hydrophilic and oleophobic surface functionalization. All the described coating compositions have a pH of 1, a concentration of surface functionalized silica nanoparticles of 1 wt% and comprise 10wt% of 2-butoxyethanol. The coating formulations used in the experiments are applied on a glass plate then dried at 60°C for 24 hours. The data presented in Table 3 reflect the oleophobic and hydrophilic properties of the various coating compositions.

**Table 3:**

| Example | Functional Silane | | Average particle diameter | | Total Surface functionalization | Ratio A/B | WCA [°] | HCA [°] |
|---|---|---|---|---|---|---|---|---|
| | A | B | | | | | | |
| 4 | H7 | C1F | 6 nm | 6 nm | 100% | 1 / 1 | 7 | 36 |
| 5 | H7 | C3F | 6 nm | 6 nm | 100% | 1 / 1 | 5 | 58 |
| 6 | H7 | C4F | 6 nm | 6 nm | 100% | 1 / 1 | 7 | 64 |
| 7 | H7 | C6F | 6 nm | 6 nm | 100% | 1 / 1 | 5 | 55 |
| 8 | H7 | C8F | 6 nm | 6 nm | 100% | 1 / 1 | 12 | 73 |
| 9 | ZS | C3F | 6 nm | 6 nm | 100% | 1 / 1 | 20 | 38 |

As shown in Table 3, protective coating compositions according to the present disclosure combine both excellent oleophobic properties (HCA > 35°) and excellent hydrophilic properties (WCA < 25°).

Examples 5, 9 and comparative examples C6 to C7: Comparative visual properties of coatings resulting from coating compositions comprising acidified silica nanoparticles having both hydrophilic and oleophobic surface functionalization, when compared to coatings resulting from coating compositions not comprising silica nanoparticles.

Examples 5 and 9 are protective coating compositions acidified silica nanoparticles having both hydrophilic and oleophobic surface functionalization, as described above. The coating compositions of examples 5 and 6 have a pH of 1, a concentration of surface functionalized silica nanoparticles of 1 wt% and comprise 10wt% of 2-butoxyethanol. These coating formulations are applied on a glass plate then dried at 60°C for 24 hours.

Examples C6 and C7 are comparative examples of coating compositions comprising organofunctional silanes but no silica nanoparticles. The comparative coating compositions C6 and C7 have a concentration of organofunctional silanes of 5 wt% in isopropanol. These coating formulations are applied on a glass plate then dried at room temperature for 24 hours. The data presented in Table 4 reflect the oleophobic and hydrophilic properties and the visual properties (assessed by visual observation) of coatings resulting from the various coating compositions.

**Table 4:**

| Example | Functional Silane | | Visual appearance | Total Surface functionalization | Ratio A/B | WCA [°] | HCA [°] |
|---|---|---|---|---|---|---|---|
| | A | B | | | | | |
| 5 | H7 | C3F | Transparent | 100% | 1 / 1 | 5 | 58 |
| C6 | H7 | C3F | Hazy, smudgy | - | 7 / 3 | 15 | 42 |
| 9 | zs | C3F | Transparent | 100% | 1 / 1 | 20 | 38 |
| C7 | zs | C3F | Hazy, inhomogeous wetting | - | 1 / 1 | 11 | 49 |

As shown in Table 4, protective coating compositions according to the present disclosure combine both excellent oleophobic properties (HCA > 35°) and excellent hydrophilic properties (WCA < 25°), as well as excellent visual properties. In contrast, coating compositions not according to the disclosure are deficient in visual properties.

Comparative examples C8 to C9: Oleophobic and hydrophilic properties of protective coating compositions comprising acidified silica nanoparticles having hydrophilic and hydrophobic surface functionalization.

Comparative example C8 uses a protective coating composition comprising a combination of acidified silica nanoparticles having exclusively hydrophilic surface functionalization and acidified silica nanoparticles having exclusively hydrophobic surface functionalization. Comparative example C9 uses a protective coating composition comprising acidified silica nanoparticles having both hydrophilic and hydrophobic surface functionalization. The comparative coating compositions C8 and C9 have a pH of 1 and a concentration of surface functionalized silica nanoparticles of 1 wt% in water. These coating formulations are applied on a glass plate then dried/cured at room temperature for 24 hours. The data presented in Table 5 reflect the oleophobic and hydrophilic properties of coatings resulting from the various coating compositions.

**Table 5:**

| Example | Functional Silane | | Average particle diameter | | Total Surface functionalization | Ratio A/B | WCA [°] | HCA [°] |
|---|---|---|---|---|---|---|---|---|
| | A | B | | | | | | |
| C8 | H7 | C8 | 6 nm | 6 nm | 100% | 1 / 1 | 9 | 7 |
| C9 | H7 | C8 | 6 nm | 6 nm | 100% | 1 / 1 | 16 | < 5 |

As shown in Table 5, protective coating compositions not according to the disclosure are deficient in oleophobic properties.

## Claims

1. A protective coating composition comprising:
a) an aqueous continuous liquid phase; and
b) acidified silica nanoparticles dispersed in the aqueous continuous liquid phase, wherein the acidified silica nanoparticles comprise mixed hydrophilic and oleophobic surface functionalization, wherein the hydrophilic surface functionalization is obtained by covalently linking the silica nanoparticle to an organofunctional moiety comprising a functional group selected from the group consisting of polyalkyleneoxy-containing moieties and zwitterionic moieties, and wherein the oleophobic surface functionalization is obtained by covalently linking the silica nanoparticle to an organofunctional moiety comprising a functional group selected from fluorine-containing moieties, and wherein the mixed hydrophilic and oleophobic surface functionalization is obtained by providing acidified silica nanoparticles having exclusively hydrophilic surface functionalization in combination with acidified silica nanoparticles having exclusively oleophobic surface functionalization.

2. A protective coating composition according to claim 1, wherein the organofunctional moiety is selected from organofunctional silanes, preferably organic alkoxysilanes.

3. A protective coating composition according to any of the preceding claims, wherein the polyalkyleneoxy-containing moieties have the general formula (I):
-(-O-CH(R¹)-CH₂-)ₙ-O-R² (I)
wherein:
n is an integer of at least 3, at least 5, at least 10, or even comprised between 3 and 30 ;
R¹ is H or CH₃; and
R² is H or an alkyl group having from 1 to 20 carbon atoms, from 1 to 10 carbon atoms, from 1 to 5 carbon atoms, or even from 2 to 3 carbon atoms.

4. A protective coating composition according to any of the preceding claims, wherein the organofunctional moiety comprising a functional group selected from the group consisting of polyalkyleneoxy-containing moieties has the following general formula (II):
(R⁴)₃₋ₘ(R³O)ₘ-Si-X-(-O-CH(R¹)-CH₂-)ₙ-O-R² (II)
wherein:
n is an integer of at least 3, at least 5, at least 10, or even comprised between 3 and 30 ;
R¹ is H or CH₃;
m is an integer from 0 to 3;
R² is H or an alkyl group having from 1 to 20 carbon atoms, from 1 to 10 carbon atoms, from 1 to 5 carbon atoms, or even from 2 to 3 carbon atoms;
R³ and R⁴ are independently an alkyl group having from 1 to 8 carbon atoms, from 1 to 6 carbon atoms, or even from 1 to 4 carbon atoms; and
X is a divalent linking group, preferably independently selected from the group consisting of alkyl, alkoxy, acyloxy, or carbamoyl.

5. A protective coating composition according to any of the preceding claims, wherein the zwitterionic moieties comprise functional groups selected from the group consisting of sulfonate groups, sulfate groups, phosphonate groups, phosphate groups, carboxylate groups, quaternary ammonium groups, sulfonium groups, phosphonium groups, and any combinations thereof.

6. A protective coating composition according to any of the preceding claims, wherein the zwitterionic moiety has the general formula (III):
-A-Y-B-Z (III)
wherein:
A and B are linking groups, which are the same or different moieties, and which are independently selected from the group of alkylene or oxyalkylene groups;
Y and Z are interchangeably the positively charged group or the negatively charged group of the zwitterionic moieties.

7. A protective coating composition according to any of the preceding claims, wherein the fluorine-containing moieties of the organofunctional moiety comprising a functional group selected from fluorine-containing moieties are selected from the group consisting of fluoroalkyl groups, perfluoroalkyl groups, fluorooxyalkyl groups, perfluorooxyalkyl groups, fluoroalkylene groups, perfluoroalkylene groups, fluorooxyalkylene groups, perfluorooxyalkylene groups, perfluoropolyether groups, and any combinations thereof.

8. A protective coating composition according to any of the preceding claims, wherein the fluorine-containing moieties of the organofunctional moiety comprising a functional group selected from fluorine-containing moieties have the general formula (V):
-C-V-Rf (V)
wherein:
C is a linking group selected from the group of alkylene groups, oxyalkylene groups;
V is selected from -C(O)NH- or -CH₂-; and
Rf is the fluorine-containing moiety.

9. A protective coating composition according to any of the preceding claims, wherein the organofunctional moiety comprising a functional group selected from fluorine-containing moieties has the following general formula (VI):
(R⁸)_{3-q}(R⁷O)_{q}-Si-C-V-Rf (VI)
wherein:
R⁷ and R⁸ are independently an alkyl group having from 1 to 8 carbon atoms, from 1 to 6 carbon atoms, or even from 1 to 4 carbon atoms;
q is an integer from 0 to 3;
C is a linking group selected from the group of alkylene groups, oxyalkylene groups;
V is selected from -C(O)NH- or -CH₂-; and
Rf is the fluorine-containing moiety.

10. A protective coating composition according to any of the preceding claims, wherein the aqueous continuous liquid phase further comprises an organic solvent, in particular a polar solvent.

11. A method of imparting hydrophilic and oleophobic properties to a hard surface, which comprises the steps of:
a) providing a protective coating composition according to any of claims 1 to 10;
b) applying the protective coating composition to the hard surface thereby forming a layer of the coating composition adjacent to the hard surface; and
c) optionally, drying and/or curing the layer of the coating composition thereby forming a protective coating layer adjacent to the hard surface.

12. A coated article comprising a substrate and a coating layer adjacent to at least part of the surface of the substrate, wherein the coating layer comprises a layer of the protective coating composition according to any of claims 1 to 10 which has been dried and/or cured onto the surface of the substrate.

13. Use of a protective coating composition according to any of claims 1 to 10 for protecting a hard surface which typically comprises a material selected from the group consisting of metal and glass, in particular glass.

## Patentansprüche

1. Schutzbeschichtungszusammensetzung, die Folgendes umfasst:
a) eine wässrige kontinuierliche flüssige Phase; und
b) angesäuerte Siliciumdioxidnanoteilchen, die in der wässrigen kontinuierlichen flüssigen Phase dispergiert sind, wobei die angesäuerten Siliciumdioxidnanoteilchen eine gemischte hydrophile und oleophobe Oberflächenfunktionalisierung umfassen, wobei die hydrophile Oberflächenfunktionalisierung durch kovalentes Verknüpfen des Siliciumdioxidnanoteilchens mit einem organofunktionellen Rest erhalten wird, der eine funktionelle Gruppe umfasst, die ausgewählt ist aus der Gruppe bestehend aus polyalkylenoxyhaltigen Resten und zwitterionischen Resten, und wobei die oleophobe Oberflächenfunktionalisierung durch kovalentes Verknüpfen des Siliciumdioxidnanoteilchens mit einem organofunktionellen Rest erhalten wird, der eine funktionelle Gruppe umfasst, die ausgewählt ist aus fluorhaltigen Resten, und wobei die gemischte hydrophile und oleophobe Oberflächenfunktionalisierung durch Bereitstellen angesäuerter Siliciumdioxidnanoteilchen mit ausschließlich hydrophiler Oberflächenfunktionalisierung in Kombination mit angesäuerten Siliciumdioxidnanoteilchen mit ausschließlich oleophober Oberflächenfunktionalisierung erhalten wird.

2. Schutzbeschichtungszusammensetzung nach Anspruch 1, wobei der organofunktionelle Rest ausgewählt ist aus organofunktionellen Silanen, vorzugsweise organischen Alkoxysilanen.

3. Schutzbeschichtungszusammensetzung nach einem der vorstehenden Ansprüche, wobei die polyalkylenoxyhaltigen Reste die allgemeine Formel (I) aufweisen:
-(-O-CH(R¹)-CH₂-)ₙ-O-R² (I)
worin:
n eine ganze Zahl von mindestens 3, mindestens 5, mindestens 10 oder sogar zwischen 3 und 30 ist;
R¹ H oder CH₃ ist; und
R² H oder eine Alkylgruppe mit 1 bis 20 Kohlenstoffatomen, 1 bis 10 Kohlenstoffatomen, 1 bis 5 Kohlenstoffatomen oder sogar 2 bis 3 Kohlenstoffatomen ist.

4. Schutzbeschichtungszusammensetzung nach einem der vorstehenden Ansprüche, wobei der organofunktionelle Rest, der eine funktionelle Gruppe umfasst, ausgewählt aus der Gruppe bestehend aus polyalkylenoxyhaltigen Resten, die folgende allgemeine Formel (II) aufweist:
(R⁴)₃₋ₘ(R³O)ₘ-Si-X-(-O-CH(R¹)-CH₂-)ₙ-O-R² (II)
worin:
n eine ganze Zahl von mindestens 3, mindestens 5, mindestens 10 oder sogar zwischen 3 und 30 ist;
R¹ H oder CH₃ ist;
m eine ganze Zahl von 0 bis 3 ist;
R² H oder eine Alkylgruppe mit 1 bis 20 Kohlenstoffatomen, 1 bis 10 Kohlenstoffatomen, 1 bis 5 Kohlenstoffatomen oder sogar 2 bis 3 Kohlenstoffatomen ist;
R³ und R⁴ unabhängig voneinander eine Alkylgruppe mit 1 bis 8 Kohlenstoffatomen, 1 bis 6 Kohlenstoffatomen oder sogar 1 bis 4 Kohlenstoffatomen sind; und
X eine zweiwertige Verknüpfungsgruppe ist, vorzugsweise unabhängig ausgewählt aus der Gruppe bestehend aus Alkyl, Alkoxy, Acyloxy oder Carbamoyl.

5. Schutzbeschichtungszusammensetzung nach einem der vorstehenden Ansprüche, wobei die zwitterionischen Reste funktionelle Gruppen umfassen, ausgewählt aus der Gruppe bestehend aus Sulfonatgruppen, Sulfatgruppen, Phosphonatgruppen, Phosphatgruppen, Carboxylatgruppen, quaternären Ammoniumgruppen, Sulfoniumgruppen, Phosphoniumgruppen und beliebigen Kombinationen davon.

6. Schutzbeschichtungszusammensetzung nach einem der vorstehenden Ansprüche, wobei der zwitterionische Rest die allgemeine Formel (III) aufweist:
-A-Y-B-Z (III)
worin:
A und B Verknüpfungsgruppen sind, die die gleichen oder verschiedenen Reste sind, und die unabhängig aus der Gruppe der Alkylen- oder Oxyalkylengruppen ausgewählt sind;
Y und Z austauschbar die positiv geladene Gruppe oder die negativ geladene Gruppe der zwitterionischen Reste sind.

7. Schutzbeschichtungszusammensetzung nach einem der vorstehenden Ansprüche, wobei die fluorhaltigen Reste des organofunktionellen Rests, der eine funktionelle Gruppe ausgewählt aus fluorhaltigen Resten umfasst, ausgewählt sind aus der Gruppe bestehend aus Fluoralkylgruppen, Perfluoralkylgruppen, Fluoroxyalkylgruppen, Perfluoroxyalkylgruppen, Fluoralkylengruppen, Perfluoralkylengruppen, Fluoroxyalkylengruppen, Perfluoroxyalkylengruppen, Perfluorpolyethergruppen und beliebigen Kombinationen davon.

8. Schutzbeschichtungszusammensetzung nach einem der vorhergehenden Ansprüche, wobei die fluorhaltigen Reste des organofunktionellen Rests, der eine funktionelle Gruppe ausgewählt aus fluorhaltigen Resten umfasst, die allgemeine Formel (V) aufweisen:
-C-V-Rf (V)
worin:
C eine Verknüpfungsgruppe ist, ausgewählt aus der Gruppe der Alkylengruppen, Oxyalkylengruppen;
V ausgewählt ist aus -C(O)NH- oder -CH₂ -; und
Rf ein fluorhaltiger Rest ist,

9. Schutzbeschichtungszusammensetzung nach einem der vorstehenden Ansprüche, wobei der organofunktionelle Rest, der eine funktionelle Gruppe ausgewählt aus fluorhaltigen Resten umfasst, die folgende allgemeine Formel (VI) aufweist:
(R⁸)_{3-q}(R⁷O)_{q}-Si-C-V-Rf (VI)
worin:
R⁷ und R⁸ unabhängig voneinander eine Alkylgruppe mit 1 bis 8 Kohlenstoffatomen, 1 bis 6 Kohlenstoffatomen oder sogar 1 bis 4 Kohlenstoffatomen sind;
q eine ganze Zahl von 0 bis 3 ist;
C eine Verknüpfungsgruppe ist, ausgewählt aus der Gruppe der Alkylengruppen, Oxyalkylengruppen;
V ausgewählt ist aus -C(O)NH- oder -CH₂-; und
Rf ein fluorhaltiger Rest ist,

10. Schutzbeschichtungszusammensetzung nach einem der vorstehenden Ansprüche, wobei die wässrige kontinuierliche flüssige Phase ferner ein organisches Lösungsmittel, insbesondere ein polares Lösungsmittel, umfasst.

11. Verfahren zum Verleihen hydrophiler und oleophober Eigenschaften an eine harte Oberfläche, das die folgenden Schritte umfasst:
a) das Bereitstellen einer Schutzbeschichtungszusammensetzung nach einem der Ansprüche 1 bis 10;
b) das Auftragen der Schutzbeschichtungszusammensetzung auf die harte Oberfläche, wodurch eine Schicht der Beschichtungszusammensetzung angrenzend an die harte Oberfläche gebildet wird; und
c) das wahlweise Trocknen und/oder Aushärten der Schicht der Beschichtungszusammensetzung, wodurch eine Schutzbeschichtungsschicht angrenzend an die harte Oberfläche gebildet wird;

12. Beschichteter Gegenstand, der ein Substrat und eine Beschichtungsschicht angrenzend an mindestens einen Teil der Oberfläche des Substrats umfasst, wobei die Beschichtungsschicht eine Schicht der Schutzbeschichtungszusammensetzung nach einem der Ansprüche 1 bis 10 umfasst, die auf der Oberfläche des Substrats getrocknet und/oder ausgehärtet wurde.

13. Verwendung einer Schutzbeschichtungszusammensetzung nach einem der Ansprüche 1 bis 10 zum Schützen einer harten Oberfläche, die üblicherweise ein Material umfasst, das ausgewählt ist aus der Gruppe bestehend aus Metall und Glas, insbesondere Glas.

## Revendications

1. Composition de revêtement protecteur comprenant :
a) une phase liquide continue aqueuse ; et
b) des nanoparticules de silice acidifiée dispersées dans la phase liquide continue aqueuse, dans laquelle les nanoparticules de silice acidifiée comprennent une fonctionnalisation de surface mixte hydrophile et oléophobe, dans laquelle la fonctionnalisation de surface hydrophile est obtenue par liaison covalente de la nanoparticule de silice à un fragment organofonctionnel comprenant un groupe fonctionnel choisi dans le groupe constitué de fragments contenant du polyalkylène-oxy et de fragments zwittérioniques, et dans laquelle la fonctionnalisation de surface oléophobe est obtenue par liaison covalente de la nanoparticule de silice à un fragment organofonctionnel comprenant un groupe fonctionnel choisi parmi des fragments contenant du fluor, et dans laquelle la fonctionnalisation de surface mixte hydrophile et oléophobe est obtenue en fournissant des nanoparticules de silice acidifiée ayant une fonctionnalisation de surface exclusivement hydrophile en combinaison avec des nanoparticules de silice acidifiée ayant une fonctionnalisation de surface exclusivement oléophobe.

2. Composition de revêtement protecteur selon la revendication 1, dans laquelle le fragment organofonctionnel est choisi parmi des silanes organofonctionnels, de préférence des alcoxysilanes organiques.

3. Composition de revêtement protecteur selon l'une quelconque des revendications précédentes, dans laquelle les fragments contenant du polyalkylène-oxy ont la formule générale (I) :
-(-O-CH(R¹)-CH₂-)ₙ-O-R² (I)
dans laquelle :
n est un nombre entier d'au moins 3, au moins 5, au moins 10, ou même compris entre 3 et 30 ;
R¹ est H ou CH₃ ; et
R² est H ou un groupe alkyle ayant de 1 à 20 atomes de carbone, de 1 à 10 atomes de carbone, de 1 à 5 atomes de carbone, ou même de 2 à 3 atomes de carbone.

4. Composition de revêtement protecteur selon l'une quelconque des revendications précédentes, dans laquelle le fragment organofonctionnel comprenant un groupe fonctionnel choisi dans le groupe constitué de fragments contenant du polyalkylène-oxy a la formule générale (II) suivante :
(R⁴)₃₋ₘ(R³O)ₘ-Si-X-(-O-CH(R¹)-CH₂-)ₙ-O-R² (II)
dans laquelle :
n est un nombre entier d'au moins 3, au moins 5, au moins 10, ou même compris entre 3 et 30 ;
R¹ est H ou CH₃ ;
m est un nombre entier allant de 0 à 3 ;
R² est H ou un groupe alkyle ayant de 1 à 20 atomes de carbone, de 1 à 10 atomes de carbone, de 1 à 5 atomes de carbone, ou même de 2 à 3 atomes de carbone ;
R³ et R⁴ sont indépendamment un groupe alkyle ayant de 1 à 8 atomes de carbone, de 1 à 6 atomes de carbone, ou même de 1 à 4 atomes de carbone ; et
X est un groupe de liaison divalent, de préférence choisi indépendamment dans le groupe constitué d'alkyle, alcoxy, acyloxy ou carbamoyle.

5. Composition de revêtement protecteur selon l'une quelconque des revendications précédentes, dans laquelle les fragments zwittérioniques comprennent des groupes fonctionnels choisis dans le groupe constitué de groupes sulfonate, groupes sulfate, groupes phosphonate, groupes phosphate, groupes carboxylate, groupes ammonium quaternaire, groupes sulfonium, groupes phosphonium, et n'importe quelle combinaison de ceux-ci.

6. Composition de revêtement protecteur selon l'une quelconque des revendications précédentes, dans laquelle le fragment zwittérionique a la formule générale (III) :
-A-Y-B-Z (III)
dans laquelle :
A et B sont des groupes de liaison, qui sont des fragments identiques ou différents, et qui sont indépendamment choisis parmi le groupe des groupes alkylène ou oxyalkylène ;
Y et Z sont de manière interchangeable le groupe chargé positivement ou le groupe chargé négativement des fragments zwittérioniques.

7. Composition de revêtement protecteur selon l'une quelconque des revendications précédentes, dans laquelle les fragments contenant du fluor du fragment organofonctionnel comprenant un groupe fonctionnel choisi parmi des fragments contenant du fluor sont choisis dans le groupe constitué de groupes fluoroalkyle, groupes perfluoroalkyle, groupes fluorooxyalkyle, groupes perfluorooxyalkyle, groupes fluoroalkylène, groupes perfluoroalkylène, groupes fluorooxyalkylène, groupes perfluoro-oxyalkylène, groupes perfluoropolyéther, et n'importe quelle combinaison de ceux-ci.

8. Composition de revêtement protecteur selon l'une quelconque des revendications précédentes, dans laquelle les fragments contenant du fluor du fragment organofonctionnel comprenant un groupe fonctionnel choisi parmi des fragments contenant du fluor ont la formule générale (V) :
-C-V-Rf (V)
dans laquelle :
C est un groupe de liaison choisi dans le groupe de groupes alkylène, groupes oxyalkylène ;
V est choisi parmi -C(O)NH- ou -CH₂ - ; et
Rf est le fragment contenant du fluor.

9. Composition de revêtement protecteur selon l'une quelconque des revendications précédentes, dans laquelle le fragment organofonctionnel comprenant un groupe fonctionnel choisi parmi des fragments contenant du fluor a la formule générale (VI) suivante :
(R⁸)_{3-q}(R⁷O)_{q}-Si-C-V-Rf (VI)
dans laquelle :
R⁷ et R⁸ sont indépendamment un groupe alkyle ayant de 1 à 8 atomes de carbone, de 1 à 6 atomes de carbone, ou même de 1 à 4 atomes de carbone ;
q est un nombre entier allant de 0 à 3 ;
C est un groupe de liaison choisi dans le groupe de groupes alkylène, groupes oxyalkylène ;
V est choisi parmi -C(O)NH- ou -CH₂- ; et
Rf est le fragment contenant du fluor.

10. Composition de revêtement protecteur selon l'une quelconque des revendications précédentes, dans laquelle la phase liquide continue aqueuse comprend en outre un solvant organique, en particulier un solvant polaire.

11. Procédé permettant de conférer des propriétés hydrophiles et oléophobes à une surface dure, qui comprend les étapes consistant à :
a) fournir une composition de revêtement protecteur selon l'une quelconque des revendications 1 à 10 ;
b) appliquer la composition de revêtement protecteur à la surface dure en formant de ce fait une couche de la composition de revêtement adjacente à la surface dure ; et
c) éventuellement, sécher et/ou durcir la couche de la composition de revêtement en formant de ce fait une couche de revêtement protecteur adjacente à la surface dure.

12. Article revêtu comprenant un substrat et une couche de revêtement adjacente à au moins une partie de la surface du substrat, dans lequel la couche de revêtement comprend une couche de la composition de revêtement protecteur selon l'une quelconque des revendications 1 à 10 qui a été séchée et/ou durcie sur la surface du substrat.

13. Utilisation d'une composition de revêtement protecteur selon l'une quelconque des revendications 1 à 10 pour protéger une surface dure qui comprend typiquement un matériau choisi dans le groupe constitué de métal et de verre, en particulier de verre.
